(19) Europäisches Patentamt / European Patent Office / Office européen des brevets

(11) **EP 4 152 217 B1**

(12) **FASCICULE DE BREVET EUROPEEN**

(45) Date de publication et mention
de la délivrance du brevet:
**15.07.2026 Bulletin 2026/29**

(21) Numéro de dépôt: **22193368.2**

(22) Date de dépôt: **01.09.2022**

(51) Classification Internationale des Brevets (IPC):
***G06N 10/40*** *(2022.01)*

(52) Classification Coopérative des Brevets (CPC):
**G06N 10/40**

(54) **DISPOSITIF QUANTIQUE**

QUANTENVORRICHTUNG

QUANTUM DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.09.2021 FR 2109709**

(43) Date de publication de la demande:
**22.03.2023 Bulletin 2023/12**

(73) Titulaire: **Commissariat à l'Energie Atomique et
aux Energies
Alternatives
75015 Paris (FR)**

(72) Inventeurs:
• **MOREL, M. Adrien
38054 GRENOBLE Cedex 09 (FR)**
• **BADETS, M. Franck
38054 GRENOBLE Cedex 09 (FR)**

(74) Mandataire: **Atout PI Laplace
Immeuble Up On
25 Boulevard Romain Rolland
CS 40072
75685 Paris Cedex 14 (FR)**

(56) Documents cités:
**FR-A1- 3 089 724     US-A1- 2019 392 352**

• **VANDERSYPEN L M K ET AL: "Interfacing spin
qubits in quantum dots and donors - hot, dense
and coherent", ARXIV.ORG, CORNELL
UNIVERSITY LIBRARY, 201 OLIN LIBRARY
CORNELL UNIVERSITY ITHACA, NY 14853, 18
December 2016 (2016-12-18), XP081362213, DOI:
10.1038/S41534-017-0038-Y**
• **BONTEANU GABRIEL: "A current controlled
CMOS current amplifier", 2017 5TH
INTERNATIONAL SYMPOSIUM ON ELECTRICAL
AND ELECTRONICS ENGINEERING (ISEEE),
IEEE, 20 October 2017 (2017-10-20), pages 1 - 4,
XP033265166, DOI: 10.1109/ISEEE.2017.8170668**

**Description**

**Domaine de l'invention**

L'invention concerne un dispositif quantique. Le domaine de l'invention est celui des dispositifs quantiques, et plus particulièrement du traitement de l'information quantique.

**Etat de la technique**

Un système quantique est basé sur l'utilisation d'un état quantique à plusieurs niveaux. Dans de nombreux domaines, comme en électronique, les systèmes quantiques peuvent comprendre plus de deux niveaux, ce qui est assimilable à l'électronique classique où des logiques à N valeurs peuvent être utilisées, avec N supérieur à 2. Un système quantique comprenant différents niveaux peut être décrit en ne considérant que ses deux premiers niveaux d'énergie. Notamment, l'informatique quantique est basée sur l'utilisation d'un état quantique à deux niveaux mesurables comme vecteur d'information, appelé qubit ou bit quantique ou encore « quantum bit » en anglais, et des lois de la mécanique quantique (superposition, intrication, mesure) afin d'exécuter des algorithmes. Un dispositif, ou calculateur, quantique permet de manipuler l'état quantique de ces qubits, notamment dans le but de réaliser des opérations. Contrairement à une machine électronique ou informatique dite classique (fonctionnant avec deux niveaux de tension définis comme correspondant à des états binaires 0 et 1), un dispositif quantique s'approche d'une machine analogique, dans le sens où l'état quantique des qubits peut prendre une infinité de valeurs.

Un système utilisant un électron ou une quasi-particule de spin % peut être utilisé pour matérialiser un qubit, dit qubit de spin, les deux niveaux correspondant aux deux orientations possibles du spin. Les qubits de spin peuvent être formés dans du semi-conducteur, avantageusement du silicium. Les technologies semi-conductrices sont étudiées pour la réalisation de qubits de spin en raison de leur haut potentiel d'intégration, à l'image de l'électronique classique. Des électrons ou des trous sont individuellement confinés dans des puits quantiques maintenus à des températures cryogéniques (inférieures à 1 Kelvin (K)) dans un cryostat et réalisés au sein de structures de confinement de tailles nanométriques définies de manière électrostatique et, dans le cas du silicium, d'architecture proche de celle des MOSFETs. Ces structures de confinement correspondent à des boîtes quantiques, également appelées « quantum dots » en anglais. Une boîte quantique se comporte comme un puit de potentiel confinant une ou plusieurs charges élémentaires (électrons ou trous) dans une région de semi-conducteur.

La lecture d'un qubit de spin est réalisée en utilisant une autre boîte quantique appelée boîte quantique de lecture et couplée à celle du qubit de spin destiné à être lu. Ces deux boîtes quantiques forment deux puits de potentiel séparés par une barrière de potentiel. Chacune des deux boîtes quantiques comporte une grille de commande électrostatique disposée sur une première région de semi-conducteur dans laquelle sont formés les puits de potentiel des boîtes quantiques. Les puits de potentiel sont disposés entre des deuxièmes régions de semi-conducteur formant des réservoirs de porteurs de charge, appelées source et drain par analogie avec la technologie MOSFET. Une quasi-particule peut être un trou ou un électron. Le spin de la quasi-particule présent dans la boîte quantique du qubit destiné à être lu est utilisé comme « spin de référence » tandis que le spin de la quasi-particule présente dans la boîte quantique de lecture est mesuré après avoir été manipulé.

Il existe à ce jour différentes méthode pour la lecture des qubits de spin. La première consiste à mesurer la capacité entre deux boîtes quantiques, image de leurs états relatifs. La seconde consiste à mesurer la conductance d'un électromètre, cette conductance étant une image de l'état du qubit à proximité de l'électromètre. Voir à ce propos Vandersypen 2016.

La première méthode de lecture des qubits de spin consiste à mesurer la capacité entre la boîte quantique du qubit destiné à être lu et la boîte quantique de lecture, qui correspond à une image de leurs états relatifs. Pour cela, un dispositif dit de réflectométrie est généralement utilisé. Un signal haute fréquence (par exemple comprise entre 100 MHz et quelques GHz) est envoyé sur la grille de la boîte quantique de lecture depuis des instruments de test placés à température ambiante, à l'extérieur du cryostat qui contient les boîtes quantiques. Le signal est réfléchi et est ensuite démodulé. Une inductance est placée en bout de ligne au niveau du qubit afin de créer un résonateur LC composé de cette inductance, d'une capacité parasite et de la capacité quantique $C_q$ formées par le qubit. Lorsque la valeur de $C_q$ varie, la phase et l'amplitude du signal réfléchi varient, ce qui peut être détecté par les instruments de mesure placés à température ambiante. Il est ainsi possible de connaitre l'état relatif (parallèle ou anti-parallèle) du spin de l'électron présent dans la boîte quantique de lecture en fonction de l'état du spin de l'électron présent dans la boîte quantique du qubit destiné à être lu.

Avec cette première méthode de lecture, il est nécessaire soit de sortir du cryostat un nombre de fils égal au nombre de qubits à exciter, ce qui devient impossible quand le nombre de qubits est important, par exemple plus de 1000, soit d'envoyer plusieurs signaux à différentes fréquences par le même fil et de discriminer ces fréquences grâce aux résonateurs LC placés à température cryogénique. Dans cette dernière solution, il est donc nécessaire que la fréquence de résonance du résonateur LC associée à chaque qubit soit calibrée et différente pour chaque résonateur. Il existe ainsi un compromis entre espacement fréquentiel entre chaque qubit (défini par le facteur de qualité des résonateurs LC, car plus le facteur de qualité est important, plus le nombre de qubits adressés par une seule ligne peut être grand), surface prise par les inductances (plus une inductance est petite, plus son facteur de qualité est faible) et temps pris par la lecture (inversement proportionnel au facteur de qualité du résonateur LC) à trouver.

De plus, avec cette première méthode de lecture, l'utilisation de noyaux magnétiques pour favoriser l'intégration des inductances est limitée par le fort champ magnétique statique nécessaire pour faire apparaitre le spin des quasi-particules et qui sature les perméabilités magnétiques des noyaux. Les inductances à air ne rencontrent pas ce problème, mais elles occupent une surface bien plus importante, limitant leur utilisation massive à l'intérieur du cryostat.

Les couplages inter-inductances peuvent également poser de nouveaux problèmes, lors d'une mesure simultanée de qubits avec l'utilisation de plusieurs de ces inductances excitées par les signaux de réflectométrie.

La deuxième méthode consiste à mesurer la conductance d'un électromètre couplé à la boîte quantique du qubit destiné à être lu, cette conductance étant une image de l'état du qubit. En effet, grâce à l'effet Zeeman (séparation d'un niveau d'énergie atomique d'un atome en plusieurs sous-niveaux d'énergie distincts sous l'effet d'un champ magnétique externe), lorsque le spin de la quasi-particule est orienté vers le haut, il se trouve nécessairement sur l'état d'énergie « haut » (état que nous nommerons H). Inversement, si le spin de la quasi-particule est orienté vers le bas, la quasi-particule se trouve sur un état d'énergie « bas » (état que nous nommerons L). En plaçant le niveau d'énergie du réservoir à proximité d'une boîte quantique entre H et L, la quasi-particule aura tendance à s'échapper de la boîte quantique quand elle est dans l'état H et à rester dans la boîte quantique quand elle est dans l'état L (blocage de Pauli). Il est ainsi possible de convertir le spin de la quasi-particule en une information de charge (quasi-particule présente ou non dans la boîte quantique), cette conversion étant couramment appelée « conversion de spin à charge » (« spin-to-charge conversion » en anglais). Cette information de charge peut être lue par un électromètre tel qu'un transistor à un électron (« Single Electron Transistor » en anglais, ou SET) ou un contact ponctuel quantique (« Quantum Point Contact » en anglais, ou QPC), dont la conductance varie en fonction de son environnement électrostatique. Pour plus d'informations sur les QPC on pourra se rapporter à Reilley 2007.

Avec cette deuxième méthode, la variation de spin de la quasi-particule est convertie en une variation de charge de la boîte quantique (grâce au blocage de Pauli) qui entraine une variation de la conductance de l'électromètre, ce qui se traduit par une variation du courant circulant dans l'électromètre. Ce courant peut ensuite être amplifié par un amplificateur de transimpédance (également appelé TIA pour « TransImpedance Amplifier » en anglais). Habituellement, cette lecture est utilisée avec un TIA placé à température ambiante connecté à un électromètre. Il n'est donc pas possible d'utiliser cette solution pour adresser un grand nombre de qubits, par exemple une matrice entière de qubits, car il serait nécessaire soit de sortir du cryostat un nombre de fils au moins égal au nombre de qubits adressés, ce qui demande une place beaucoup trop importante, soit de disposer tous les TIA dans le cryostat, ce qui n'est pas possible compte tenu des capacités de refroidissement des cryostats actuels (1W maximum pour un fonctionnement à 4K, ou 1mW pour un fonctionnement à 100mK). De plus, la vitesse de lecture d'une telle solution est limitée par la capacité des fils (comprise entre 100 et 300 pF) à charger en amont des TIAs placés à température ambiante. La bande passante d'un tel système ne pourrait que difficilement dépasser la dizaine de kHz.

Un but de l'invention est de remédier à au moins un des inconvénients précités.

Un autre but de l'invention est un dispositif quantique agencé pour minimiser le nombre de fil par qubit de spin.

Un autre but de l'invention est de proposer un dispositif quantique consommant moins d'énergie.

Un autre but de l'invention est de proposer un dispositif quantique plus compact.

## Exposé de l'invention

Au moins un des objectifs précités est atteint par un dispositif quantique comprenant :

- plusieurs qubits de spin comprenant chacun au moins une boîte quantique,
- plusieurs électromètres, chacun étant couplé de manière capacitive à un puit de potentiel de l'au moins une boîte quantique d'au moins un des qubits de spin, et
- plusieurs oscillateur verrouillé par injection, chacun étant couplé à au moins une électrode d'un des électromètres et agencé pour émettre un signal oscillant, appelé signal d'excitation, sur au moins une électrode d'entrée de l'électromètre auquel il est couplé, chaque signal d'excitation ayant une fréquence différente,
caractérisé en ce qu'il comprend également
- un circuit d'amplification comprenant au moins un amplificateur, ledit circuit d'amplification étant couplé à la sortie de chaque électromètre et comprenant une sortie,

et en ce que ledit dispositif comprend une boucle de retour couplant la sortie dudit circuit d'amplification à une entrée de chaque oscillateur verrouillé par injection et dans laquelle circule un signal électrique, appelé signal d'injection, comprenant des composantes aux fréquences desdits signaux d'excitation,, chaque oscillateur verrouillé par injection étant agencé pour recevoir le signal d'injection et en fonction dudit signal d'injection, conserver son signal d'excitation dans un premier état de fonctionnement ou diminuer son signal d'excitation dans un deuxième état de fonctionnement.

Suivant ces caractéristiques, le dispositif selon l'invention permet la lecture d'une pluralité de qubits de spin par utilisation d'un seul circuit d'amplification pouvant comprendre qu'un seul amplificateur, N électromètres ainsi que N oscillateurs verrouillés par injection, avec N supérieur à 1. Par conséquent, le dispositif selon l'invention permet la lecture d'une pluralité de qubits de spin tout en limitant le nombre de fil par qubit de spin.

En outre, suivant l'invention, la sortie du circuit d'amplification est connectée à une entrée des N oscillateurs verrouillés par injection ce qui permet au signal d'injection d'être injecté dans les oscillateurs verrouillés par injection qui sont utilisés pour exciter les électromètres. Suivant l'invention, chaque oscillateur verrouillé par injection reçoit en entrée un signal d'injection comportant toutes les composantes des signaux d'excitation du dispositif selon l'invention et en sa sortie émet un seul signal d'excitation. En particulier et pour chaque oscillateur verrouillé par injection, la présence d'un signal d'injection à la fréquence de résonance, de préférence, avec une phase opportune (généralement en opposition de phase) réduit drastiquement l'amplitude de l'oscillation du signal d'injection émis par l'oscillateur d'injection, tandis qu'un signal d'injection à une fréquence différence est sans effet sur le fonctionnement de l'oscillateur par injection considéré. Chaque oscillateur verrouillé par injection comporte ainsi de manière alternative deux états de fonctionnement, le premier état dans lequel le signal d'excitation oscille suivant un état initial, et le deuxième état dans lequel le signal d'injection est diminué. Le dispositif selon l'invention permet ainsi de limiter le nombre de composants électroniques utilisés. Ainsi, dans le dispositif selon l'invention, la consommation en énergie ainsi que la place prise par les composants électroniques sont optimisées, ce qui permet de fournir un dispositif compact et consommant moins d'énergie que les dispositifs connus selon l'état de l'art.

Un objet de l'invention est un dispositif quantique comprenant:

- plusieurs qubits de spin comprenant chacun au moins une boîte quantique,
- plusieurs électromètres, chacun étant couplé de manière capacitive à un puit de potentiel de l'au moins une boîte quantique d'au moins un des qubits de spin,
- plusieurs oscillateurs verrouillés par injection, chacun étant couplé à au moins une électrode d'un des électromètres et agencé pour émettre un signal oscillant, appelé signal d'excitation, sur au moins une électrode d'entrée de l'électromètre auquel il est couplé, chaque signal d'excitation ayant une fréquence différente,
- un circuit d'amplification comprenant au moins un amplificateur, ledit circuit d'amplification étant couplé à la sortie de chaque électromètre et comprenant une sortie, caractérisé en ce que ledit dispositif comprend une boucle de retour couplant la sortie dudit circuit d'amplification à une entrée de chaque oscillateur verrouillé par injection et dans laquelle circule un signal électrique, appelé signal d'injection, comprenant des composantes aux fréquences desdits signaux d'excitation, chaque oscillateur verrouillé par injection étant agencé pour recevoir le signal d'injection et en fonction dudit signal d'injection, conserver son signal d'excitation dans un premier état de fonctionnement ou diminuer son signal d'excitation dans un deuxième état de fonctionnement.

Un autre objet de l'invention est un procédé pour la lecture de plusieurs qubits de spin comprenant chacun une boite quantique, ledit procédé utilisant plusieurs électromètres, chacun étant couplé de manière capacitive à un puit de potentiel de l'au moins une boîte quantique d'au moins un des qubits de spin, plusieurs oscillateurs verrouillés par injection chacun étant couplé à au moins une électrode d'un des électromètres, un circuit d'amplification, ledit circuit d'amplification étant couplé à la sortie de chaque électromètre et comprenant au moins un amplificateur et une sortie, ledit procédé comprenant :

- une émission par chaque oscillateurs verrouillés par injection d'un signal oscillant, appelé signal d'excitation, sur au moins une électrode d'entrée de électromètre auquel il est couplé, chaque signal d'excitation ayant une fréquence différente, caractérisé en ce que ledit procédé comprend en outre : une injection d'un signal, appelé signal d'injection, dans chaque oscillateur verrouillé par injection par une boucle de retour couplant la sortie dudit circuit d'amplification à l'entrée de chaque oscillateur verrouillé par injection, le signal d'injection comprenant des composantes aux fréquences desdits signaux d'excitation, et pour chaque oscillateur verrouillé par injection, une diminution ou une conservation du signal d'excitation résultant dudit signal d'injection.

**Brève description des dessins**

L'invention sera mieux comprise et d'autres avantages apparaitront à la lecture de la description qui va suivre donnée à titre non limitatif et grâce aux figures annexées parmi lesquelles :

La FIGURE 1 est une représentation schématique d'un premier exemple d'un dispositif selon l'invention ;

La FIGURE 2 est une représentation schématique du premier exemple du dispositif selon l'invention lorsque tous les qubits de spins sont dans un état bas ;

La FIGURE 3 est une représentation schématique du premier exemple du dispositif selon l'invention lorsqu'un des qubits de spins est à l'état haut ;

La FIGURE 4 est une représentation schématique du premier exemple du dispositif selon l'invention lorsque le moyen de mesure associé au qubit de spins à l'état haut est dans un deuxième état de fonctionnement ;

La FIGURE 5 est une représentation schématique d'un premier exemple du dispositif selon l'invention lorsque trois qubits de spins sont à l'état haut ;

La FIGURE 6 est une représentation schématique du premier exemple du dispositif selon l'invention lorsque les moyens de mesure associés aux qubits de spins à l'état haut sont dans un deuxième état de fonctionnement ;

La FIGURE 7 est une représentation schématique d'un deuxième exemple d'un dispositif selon l'invention ;

La FIGURE 8 est un exemple de moyen de mesure utilisé dans un dispositif selon l'invention ;

La FIGURE 9 est un exemple circuit d'amplification utilisé dans un dispositif selon l'invention ;

La FIGURE 10 est un autre exemple de moyen de mesure utilisé dans un dispositif selon l'invention ;

La FIGURE 11 est un exemple d'un oscillateur verrouillé par injection utilisé dans un dispositif selon l'invention ;

La FIGURE 12 est une représentation schématique d'un troisième exemple d'un dispositif selon l'invention ; et

La FIGURE 13 est une représentation schématique d'un quatrième exemple d'un dispositif selon l'invention.

La FIGURE 14 est une représentation schématique d'un premier exemple de procédé selon l'invention.

## Description détaillée des dessins

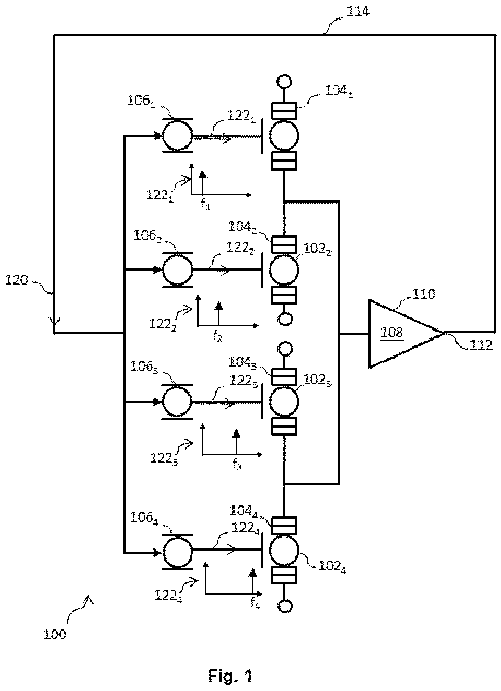

La FIGURE 1 est une représentation schématique d'un premier exemple d'un dispositif 100. Le dispositif 100 est un dispositif quantique 100 et comprend :

- plusieurs qubits de spin 102 comprenant chacun au moins une boîte quantique,
- plusieurs électromètres 104 chacun étant couplé de manière capacitive à un puit de potentiel de l'au moins une boîte quantique d'au moins un des qubits de spin 102,
- plusieurs oscillateur verrouillé par injection 106, chacun étant couplé à au moins une électrode d'un des électromètres 104 et agencé pour émettre un signal oscillant, appelé signal d'excitation 122, sur au moins une électrode d'entrée de l'électromètre 104 auquel il est couplé, chaque signal d'excitation 122 ayant une fréquence différente,
- un circuit d'amplification 108 comprenant au moins un amplificateur 110, ledit circuit d'amplification 108 étant couplé à la sortie de chaque électromètre 104 et comprenant une sortie 112.

Dans cet exemple, le dispositif comprend en particulier :

- quatre qubits de spin, chacun numéroté $102_1$, $102_2$, $102_3$, $102_4$,
- quatre électromètres, appelés respectivement premier électromètre $104_1$, deuxième électromètre $104_2$, troisième électromètre $104_3$ et quatrième électromètre $104_4$, et
- quatre oscillateurs verrouillés par injection 106, appelés respectivement premier oscillateur verrouillé par injection $106_1$, deuxième oscillateur verrouillé par $106_2$, troisième oscillateur verrouillé par injection $106_3$, et quatrième oscillateur verrouillé par injection $106_4$.

Bien entendu, dans d'autres variantes de dispositif 100, le dispositif 100 peut comprendre plus ou moins de ces composants. Par exemple, le dispositif 100 peut comprendre entre 2 et 10000 qubits.

Le dispositif 100 comprend en outre une boucle de retour 114 couplant la sortie 112 du circuit d'amplification 108 à une entrée 116 de chaque oscillateur verrouillé par injection 106 et dans laquelle circule un signal électrique, appelé signal d'injection 120 noté aussi $I_{108}$. Le signal d'injection 120 comprend des composantes aux fréquences desdits signaux d'excitation 122. Dans le dispositif 100, chaque oscillateur verrouillé par injection 106 est agencé pour recevoir le signal d'injection 120 et en fonction dudit signal d'injection 120, conserver son signal d'excitation 122 dans un premier état de fonctionnement ou diminuer son signal d'excitation 122 dans un deuxième état de fonctionnement. Dans l'exemple illustré en FIGURE 1, le signal d'injection 120 est relatif à un courant. Dans d'autres variantes, le signal d'injection peut être une tension. Pour plus d'informations sur les oscillateurs verrouillés par injections on pourra se rapporter à Yoon 2004 ou à FR 3 089 724.

Dans le dispositif 100 illustré en FIGURE 1, le circuit d'amplification 108 comprend un seul et unique amplificateur 110. Dans le mode de réalisation illustré en FIGURE 1, l'amplificateur peut être un amplificateur transimpédance, aussi noté TIA ou le circuit d'amplification 108 est agencé pour réaliser une amplification en courant.

De manière non limitative, les qubits de spin du dispositif 100 peuvent être des qubits de spin réalisés dans une couche de semi-conducteur, par exemple de silicium ou du germanium. Les charges dont le spin est destiné à être lu peuvent correspondre à des électrons ou à des trous.

En outre, suivant cet exemple de réalisation, les électromètres 104 du dispositif 100 peuvent comprendre, de préférence être, des transistors à un électron connu en anglais sous le nom de Single Electron Transistor et noté SET. Dans ce cas, chaque électromètre 104 du dispositif 100 peut comprendre une grille, une source et un drain. A titre d'exemple, le drain et la grille de chaque électromètre 104 peuvent former les électrodes d'entrées des électromètres 104 alors que les sources des électromètres 104 forment les électrodes de sorties des électromètres 104. Les sources des électromètres 104 peuvent être reliées électriquement entres elles. Bien entendu, dans d'autres variantes non illustrées, les électromètres 104 peuvent comprendre ou être des contacts ponctuels quantiques connus en anglais sous le nom Quantum Point Contact et noté QPC.

Suivant cet exemple, chaque oscillateur verrouillé par injection 106 peut être couplé sur la grille de l'électromètre 104 correspondant. Ainsi, chaque signal d'excitation 122 est appliqué sur la grille de l'électromètre 104. Dans une autre variante, chaque oscillateur verrouillé par injection 106 peut être couplé sur le drain de l'électromètre 104 correspondant. Le signal d'excitation envoyé sur le drain de l'électromètre peut être plus linéaire qu'un signal envoyé sur la grille de l'électromètre. La précision de la mesure peut donc être améliorée.

Lorsque les électromètres 104 correspondent à des QPC, les signaux d'excitation 122 sont appliqués par oscillateurs verrouillés par injection 106 sur l'électrode d'entrée de chacun des électromètres 104 de type QPC, cela peut être sur l'électrode sur laquelle une tension de polarisation continue est délivrée.

Suivant la FIGURE 1, chaque signal d'excitation 122 peuvent être des signaux sinusoïdaux et ayant tous des fréquences différentes. Le signal d'excitation 122 peut être relatif à un courant. Dans l'exemple illustré en FIGURE 1, chaque oscillateur verrouillé par injection 106 produit un signal d'excitation 122 comprenant au moins une fréquence et une amplitude. La fréquence du signal d'excitation 122 est propre à chaque oscillateur verrouillé par injection 106 et l'amplitude du signal d'excitation 122 est fonction de l'état du qubit de spin.

A titre d'exemple, le signal sortant de chaque oscillateur verrouillé par injection 106 peut se noter :

$$I_{106_i} = A_i sin(2\pi f_i t)$$

Avec l'indice i correspondant au numéro du oscillateur verrouillé par injection 106 et $f_i$ correspondant à la fréquence de l'oscillateur verrouillé par injection 106 numéroté i et $A_i$ l'amplitude du signal d'excitation 122 correspondant. Dans cet exemple, l'amplitude $A_i$ sortant de chaque électromètre 104 est fonction de l'état du qubit de spin placé vis-à-vis de l'électromètre 104 correspondant. De manière non limitative, le signal d'excitation $122_1$ délivré par le premier oscillateur verrouillé par injection $106_1$ peut être de fréquence $f_1$ égale à 10 MHz, le signal d'excitation $122_2$ délivré par le deuxième oscillateur verrouillé par injection $106_2$ peut être de fréquence $f_2$ égale à 11 MHz, le signal d'excitation $122_3$ délivré par le troisième oscillateur verrouillé par injection $106_3$ peut être de fréquence $f_3$ égale à 13 MHz et le signal d'excitation $122_4$ délivré par le quatrième oscillateur verrouillé par injection $106_4$ peut être de fréquence $f_4$ égale à 14 MHz. Ainsi, suivant la FIGURE 1, tous les signaux d'excitation 122 comprennent des fréquences différentes. En outre, ces fréquences sont assez espacées pour éviter des erreurs liées à des fausses alarmes et/ou des non-détections. Typiquement l'espacement entre les fréquences peut être de l'ordre de 1 MHz, plus généralement entre 100 kHz et 10 MHz.

Dans le dispositif 100, tous les signaux en sortie des électromètres 104 sont combinés en un signal à l'entrée du circuit d'amplification 108. Le signal à l'entrée du circuit d'amplification 108 est, par la loi des nœuds, fonction de tous les signaux sortant des différents électromètres 104.

A titre d'exemple, le signal à l'entrée du circuit d'amplification 108 s'écrit

$$I_{e,108} = \sum_{i=1}^{N} I_{106_i} = \sum_{i=1}^{N} A_i sin(2\pi f_i t)$$

Avec N correspondant au nombre total d'électromètres 104 présents dans le dispositif 100 (dans le cas de la FIGURE 1, N est égal à 4), l'indice e se référant à l'entrée du circuit d'amplification 108. Ainsi le signal à l'entrée du circuit d'amplification 108 est fonction de tous les signaux d'excitation 122. Le signal à l'entrée du circuit d'amplification 108 contient ainsi toutes les composantes de tous les signaux d'excitation 122 du dispositif 100. Par conséquent, le signal à l'entrée du circuit d'amplification 108 contient les informations de l'état de chaque qubit de spin. Sur l'exemple illustré en FIGURE 1, le signal à l'entrée du circuit d'amplification 108 est un spectre qui comprend une raie associée à chaque signal d'excitation 122. Chaque raie du spectre du signal à l'entrée du circuit d'amplification 108 présente une amplitude fonction de l'état du spin correspondant.

A titre d'exemple, le dispositif 100 comporte en outre un cryostat incluant une chambre configurée pour être maintenue à une température inférieure ou égale à 4 Kelvins (K) et dans laquelle sont au moins disposés les qubits de spin, les électromètres 104, les oscillateurs verrouillés par injection 106, et le circuit d'amplification 108 et si besoin, des circuits de polarisation.

Dans le cas du dispositif selon l'invention, l'information sur le spin de chaque qubit de spin est obtenue par étude du signal d'excitation 122 en sortie de chaque oscillateur verrouillé par injection 106. Le signal d'injection 120 entrant dans chaque oscillateur verrouillé par injection 106 porte une information démultiplexée dans les oscillateurs verrouillés 106 servant à l'excitation initiale. Ainsi, le dispositif 100 repose sur l'utilisation de N électromètres 104, N oscillateurs verrouillés par injection 106 et d'un circuit d'amplification 108 comprenant, dans l'exemple illustré, un seul amplificateur 110, utilisés pour la lecture de N qubits de spin, avec N étant un entier supérieur à 1. Un tel agencement permet aussi de s'affranchir de l'utilisation d'une multitude de chaînes de démultiplexage qui peuvent être utilisées pour retrouver l'information sur le spin de chaque qubit de spin (par exemple N chaînes de démultiplexage) qui peuvent être constituées de plusieurs composants comme des convertisseurs analogiques-numériques et/ou des mixeurs, et/ou des intégrateurs, et/ou des comparateurs. Par conséquent, le dispositif selon l'invention est moins volumineux et la non-utilisation de chaîne(s) de démultiplexage permet de limiter la consommation d'énergie utilisée par chaque composant et donc de limiter la consommation d'énergie du dispositif selon l'invention.

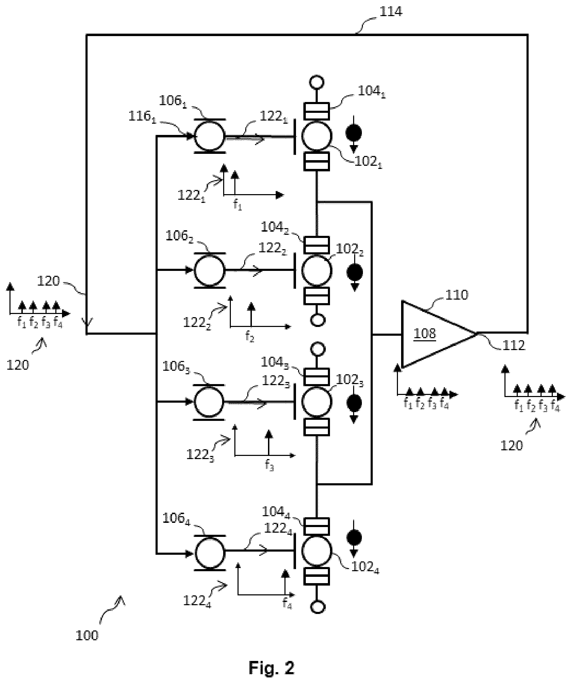

La FIGURE 2 est une représentation schématique du dispositif 100 lorsque tous les qubits de spin du dispositif 100 sont à l'état bas.

Dans le dispositif 100, la conductance associée à chaque électromètre 104 varie en fonction de l'état du qubit de spin avec lequel l'électromètre 104 est couplé. A titre d'exemple, lorsque le qubit de spin est à l'état bas la conductance d'un électromètre 104 peut être de l'ordre de la dizaine de nS (nanoSiemens), correspondant à un courant de l'ordre du nA (nanoAmpère), alors que la conductance d'un électromètre 104, lorsque le qubit de spin est à l'état bas, peut être de l'ordre de la dizaine de pS (picoSiemens), correspondant à un courant de l'ordre du pA (picoAmpère). Le signal en sortie de chaque électromètre dépend de l'état du qubit de spin.

A titre d'exemple, le signal d'excitation 122 traversant un électromètre 104 peut être de l'ordre du pA si un électron présent dans la boîte quantique du qubit de spin a son spin orienté vers le bas, et de l'ordre du nA si l'électron présent dans la boîte quantique du qubit de spin a son spin orienté vers le haut.

Les qubits de spin illustrés en FIGURE 1 sont tous à l'état bas. Par conséquent, les amplitudes associées à chaque qubits de spin de l'ordre du pico ampère (pA) et donc faible par rapport à l'état de qubits de spin à l'état haut pouvant être de l'ordre du nA. Ainsi, le signal à l'entrée du circuit d'amplification 108 est de l'ordre du pA.

Le circuit d'amplification 108 est agencé pour amplifier le signal à son entrée. Dans l'exemple illustré en FIGURE 2, le circuit d'amplification est agencé pour réaliser une amplification négative. Une telle caractéristique permet de mettre en œuvre simplement le fonctionnement du deuxième état de fonctionnement des oscillateurs verrouillés par injection. Ainsi, le signal d'injection 120 est proportionnel au signal à l'entrée du circuit d'amplification 108 et présente un déphasage d'environ 180° par rapport au signal à l'entrée du circuit d'amplification 108. Dans cet exemple, le signal d'injection 120 est un spectre qui comprend une raie associée à chaque signal d'excitation 122. Chaque raie du spectre du signal d'injection 120 présente une amplitude fonction de l'état du spin correspondant. Ainsi, l'utilisation d'un spectre propose une représentation simple et adaptée au traitement du signal d'injection par les oscillateurs verrouillés par injection 106. Notamment, cela peut limiter les erreurs liées aux fausses alarmes et/ou de non détection. Le dispositif 100 est donc plus précis.

Le signal d'injection 120 en sortie du circuit d'amplification 108 parcourt la boucle de retour 114 afin d'être injecté dans les différents oscillateurs verrouillés par injection 106 du dispositif 100. Le signal injecté dans chaque oscillateur verrouillé par injection 106 est ainsi proportionnel au signal d'injection 120.

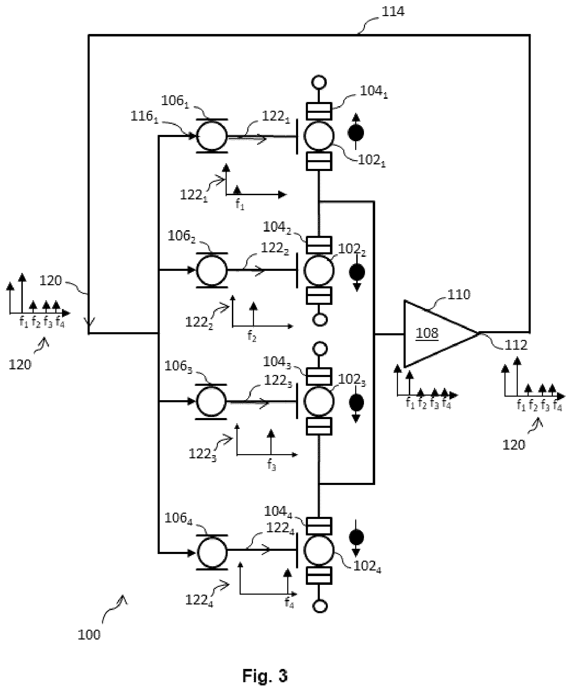

La FIGURE 3 est une représentation schématique du dispositif 100 lorsqu'un des qubits de spin du dispositif 100 passe à l'état haut.

Dans le cas de la FIGURE 3, le qubit de spin numéroté 1 est à l'état haut. A titre d'exemple, le signal en sortie du premier électromètre 104₁ est de l'ordre du nA donc supérieur aux signaux en sortie des autres électromètres $104_2$, $104_3$, $104_4$ de l'ordre du pA. Ainsi, dans le signal à l'entrée du premier circuit d'amplification 108, la première raie à la fréquence $f_1$ comprend une amplitude supérieure aux raies positionnées aux fréquences $f_2$, $f_3$ et $f_4$. Il en est de même du signal d'injection 120 en sortie du circuit d'amplification 108.

Dans l'exemple de la FIGURE 3, le signal réinjecté dans chaque oscillateur verrouillé par injection 106 contient toutes les composantes du signal d'injection 120. Suivant cet exemple, l'amplitude du signal d'injection 120 de la raie positionnée à la fréquence $f_1$ est supérieure ou égale à un seuil.. Le premier oscillateur verrouillé par injection 106, passe dans le deuxième état de fonctionnement. Le signal d'excitation 122₁ en sortie du premier oscillateur verrouillé par injection 106₁ fonctionnant au deuxième état de fonctionnement est inférieur par rapport au signal d'excitation 122₁ du premier oscillateur verrouillé par injection 106₁ fonctionnant dans le premier état de fonctionnement. Le seuil qui provoque le basculement de l'oscillateur 106₁ de son premier vers son deuxième état de fonctionnement dépend de la topologie de l'oscillateur, de son point de polarisation, du fait qu'il fonctionne avec une injection en tension ou en courant. Par exemple, dans le cas d'une injection en courant, le seuil peut être compris entre 0.1 fois et 1 fois le courant de polarisation de l'oscillateur.

A l'inverse, les amplitudes du signal d'injection 120 positionnées aux raies de fréquences respectives $f_2$, $f_3$ et $f_4$

sont inférieures aux seuils définis à partir du signal d'excitation 122 émis par les deuxième, troisième et quatrième oscillateurs verrouillés par injection $106_2, 106_3, 106_4$ lorsqu'ils sont dans leurs premier état de fonctionnement. Par conséquent, les deuxième, troisième et quatrième oscillateurs verrouillés par injection $106_2$, $106_3$ et $106_4$ conservent leurs premiers états de fonctionnement. Leurs signaux d'excitation 122 associés sont donc conservés, ils ne sont pas diminués. Bien que le signal d'injection 120 comprenne des raies aux différentes fréquence $f_1, f_2, f_3$ et $f_4$, le signal d'injection 120 à la fréquence $f_1$ n'intervient pas dans le fonctionnement des deuxième, troisième et quatrième moyens d'excitation $106_2$, $106_3, 106_4$.

Ces caractéristiques permettent de favoriser le comportement « filtrant » des oscillateurs verrouillés par injection du dispositif selon l'invention, ce qui permet soit la conservation du signal d'excitation « initial », c'est-à-dire le signal d'excitation émis initialement par chaque oscillateur verrouillé par injection, soit une diminution voire un arrêt de l'émission du signal d'excitation.

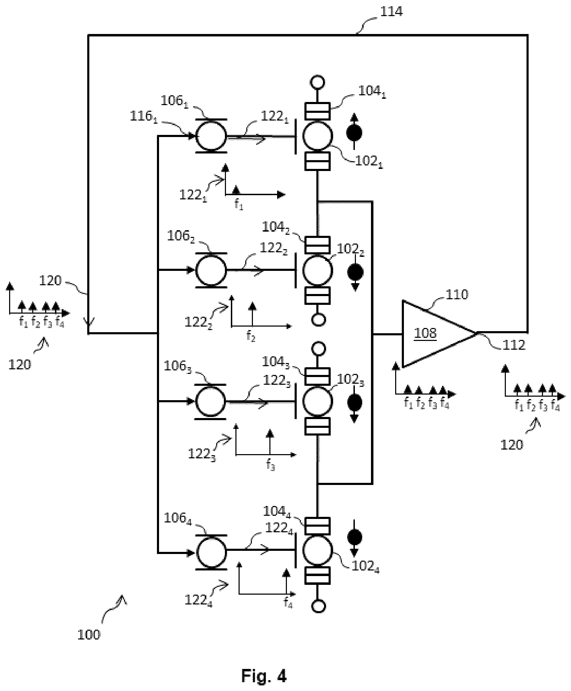

La FIGURE 4 est une représentation schématique du dispositif 100 lorsque le premier oscillateur verrouillé par injection 106, fonctionne dans son deuxième état de fonctionnement. Le signal émis par l'oscillateur est un signal de tension, l'impédance de la grille de l'électromètre étant pratiquement infinie.

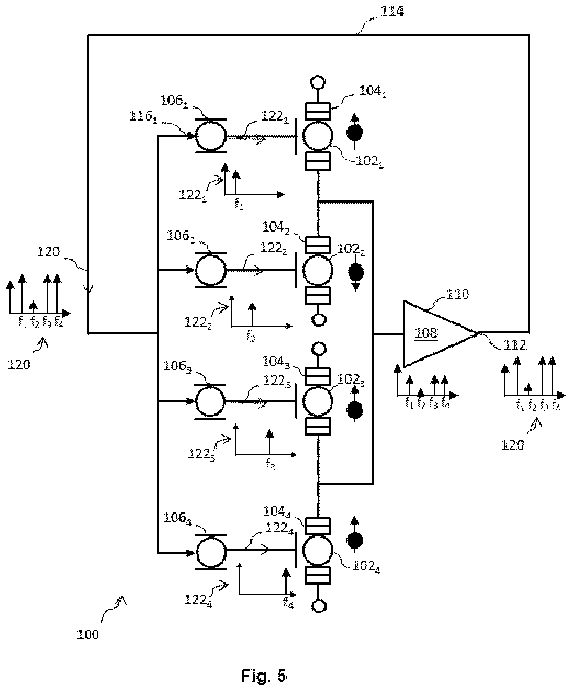

La FIGURE 5 est une représentation schématique du dispositif 100 lorsque trois qubits de spin du dispositif 100 sont à l'état haut.

Sur l'exemple illustré en FIGURE 5, le premier, troisième et quatrième qubits de spin sont à l'état haut. Par exemple, la conductance associée au deuxième électromètre $104_2$ est de l'ordre de la dizaine de nS alors que celles des premier, troisième et quatrième électromètres $104_1, 104_3, 104_4$ est de l'ordre de la dizaine de pS.

Suivant cet exemple, le signal en sortie du deuxième électromètre $104_2$ peut être négligé. Le signal à l'entrée du circuit d'amplification 108 peut ainsi être simplifié et s'écrire suivant la formule suivante :

$$I_{e,108} = \sum_{i=1}^{4} I_{106_i} \approx A_1 sin(2\pi f_1 t) + A_3 sin(2\pi f_3 t) + A_4 sin(2\pi f_4 t)$$

Le signal d'injection 120 en sortie du circuit d'amplification 108 peut ainsi s'écrire comme suit :

$$I_{108} \approx - AA_1 sin(2\pi f_1 t) - AA_3 sin(2\pi f_3 t) - AA_4 sin(2\pi f_4 t)$$

Avec A correspondant au facteur d'amplification du circuit d'amplification 108.

Suivant cet exemple, le signal d'injection 120 contient les composantes fréquentielles correspondant aux électromètres 104 pour lesquels le qubit associé est à l'état haut. Suivant cet exemple, le signal réinjecté dans les premier, troisième et quatrième oscillateurs verrouillés par injection $106_1, 106_3, 106_4$ est proportionnel au signal d'injection 120 et comprend ainsi des raies d'amplitudes de même ordre de grandeur. Le premier, troisième et quatrième oscillateurs verrouillés par injection $106_1, 106_3, 106_4$ vont ainsi passer dans leur deuxième état de fonctionnement, ce qui provoque une forte diminution du signal d'excitation 122 en sortie de ces oscillateurs verrouillés par injection $106_1, 106_3, 106_4$. A l'inverse, le signal injecté dans le deuxième oscillateur verrouillé par injection $106_2$ ne contient pas, ou que très faible, une composante à la fréquence $f_2$. Par conséquent, le deuxième oscillateur verrouillé par injection $106_2$ reste dans son premier état de fonctionnement. Le signal d'excitation du deuxième oscillateur verrouillé par injection $106_2$ est ainsi conservé, i.e. il n'est pas diminué. Par conséquent le signal d'excitation $122_2$ du deuxième oscillateur verrouillé par injection $106_2$ oscille à la même amplitude.

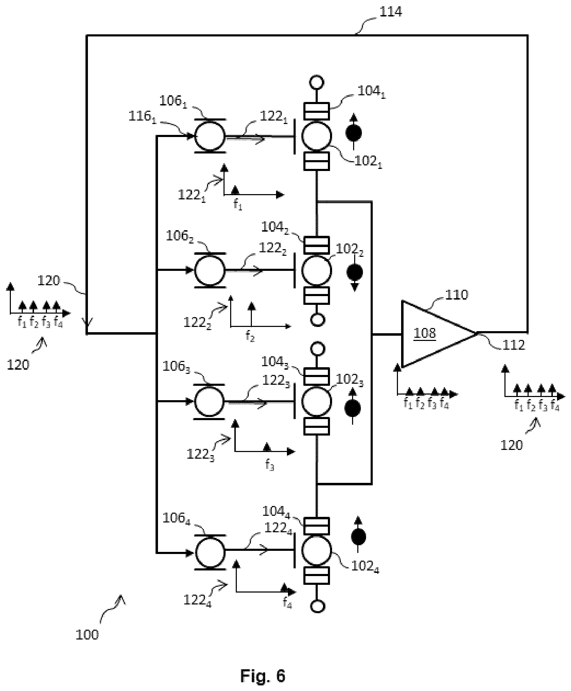

La FIGURE 6 est une représentation schématique du comportement des premier, troisième et quatrième oscillateurs verrouillés par injection $106_1, 106_3, 106_4$ dispositif 100 après le passage à l'état haut de trois qubits de spin du dispositif 100.

Suivant cet exemple, les premier, troisième et quatrième moyens d'excitation $106_1, 106_3, 106_4$ sont passés dans le deuxième mode de fonctionnement.

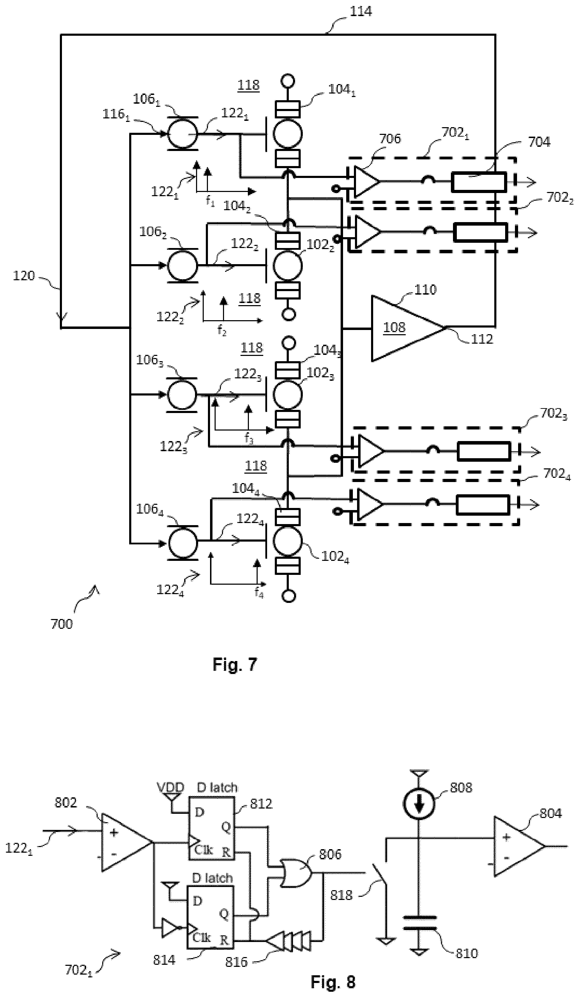

La FIGURE 7 est un deuxième exemple de dispositif 700 selon l'invention.

Le dispositif 700 illustré en FIGURE 7 comprend tous les éléments du dispositif 100. Ainsi, seules les différences seront décrites.

Le dispositif 700 comprend en outre plusieurs moyens de mesure 702, numérotés respectivement $702_1, 702_2, 702_3$ et $702_4$, chacun étant couplé avec un oscillateur verrouillé par injection 106. Chaque moyen de mesure 702 est agencé pour détecter l'état de fonctionnement de l'oscillateur verrouillé par injection 106 auquel il est couplé et en fonction de l'état détecté, émettre un signal, dit de mesure, relatif à un état du spin. Ainsi, l'étude du signal d'injection 122 émis par chaque oscillateur verrouillé par injection 106 donne une information sur l'état du qubit de spin correspondant. De ce fait, dans le dispositif selon l'invention, la lecture des qubits de spins peut se faire directement par l'analyse des signaux d'excitation 122 ce qui permet encore plus d'améliorer la compacité du dispositif selon l'invention ainsi que sa faible consommation en énergie. En outre, cela favorise sa simplicité de mise en œuvre car le traitement de l'information est facilité.

A titre d'exemple non limitatif, chaque moyen de mesure 702 comprend un comparateur analogique 704 connecté à son entrée à la sortie d'un des oscillateurs verrouillés par injection 106 et couplé à sa sortie à un moyen de traitement numérique 706. Le comparateur analogique 704 est agencé pour détecter le mode de fonctionnement de l'oscillateur verrouillé par injection 106, c'est-à-dire le premier état de fonctionnement ou le deuxième état de fonctionnent de l'oscillateur verrouillé par injection 106 auquel il est connecté. Par exemple, chaque comparateur analogique 704 enregistre en permanence le signal d'excitation 122 de l'oscillateur verrouillé par injection 106 correspondant et émet un signal qui varie en fonction du signal d'excitation 122. Dans l'exemple illustré en FIGURE 7, l'entrée négative du comparateur analogique 704 est fixée à un potentiel et l'entrée positive du comparateur analogique 704 est fixée à la sortie de l'oscillateur verrouillé par injection 106 correspondant.

Pour un moyen de mesure considéré 702, lorsque l'oscillateur 106 fonctionne dans son premier état de fonctionnement, par exemple lorsqu'aucune diminution importante du signal d'excitation 122 est enregistrée par le comparateur analogique 704, alors la sortie du signal d'excitation 122 de l'oscillateur verrouillé par injection 106 passe successivement au-dessus puis au-dessous du potentiel de l'entrée négative du comparateur analogique 704. La sortie du comparateur analogique 704 peut ainsi être un signal carré dont la fréquence est égale à celle de l'oscillateur verrouillé par injection 106.

Lorsque l'oscillateur verrouillé par injection 106 fonctionne dans son deuxième état de fonctionnement, par exemple lorsqu'une diminution importante du signal d'excitation 122 est enregistrée par le comparateur 704, alors le signal d'excitation 122 ne passe jamais au-dessus ou en dessous du potentiel de l'entrée négative du comparateur analogique 704. Le signal émis en sortie du comparateur analogique 704 est ainsi un signal constant.

Le signal émis par le comparateur analogique 704 est transmis au moyen de traitement numérique 706 qui va émettre en sortie un signal numérique pouvant avoir deux états, 0 ou 1, et qui traduisent l'état du spin du qubit de spin correspondant. A titre d'exemple, l'état 0 peut traduire un état bas du spin alors que l'état 1 peut traduire l'état haut du spin.

De manière alternative, le circuit illustré en FIGURE 7 peut comprendre plusieurs circuits de polarisations 118 (illustration schématique), chacun étant couplé à un électromètre 104 et agencé pour appliquer une tension de polarisation continue sur ledit électromètre 104 adaptée pour que chaque électromètre 104 fonctionne en blocage de Coulomb. Suivant cet exemple, la tension de polarisation continue peut être appliquée sur l'électrode d'entrée de chaque électromètre 104, par exemple sur le drain et la grille de chaque électromètre. Dans cet exemple, tous les électromètres 104 sont polarisés avec des tensions de polarisation continues de même valeur. Les circuits de polarisation 118 peuvent aussi être implémentés sur le dispositif 100.

De préférence, la polarisation des électromètres 104 est réalisée de manière à obtenir une forte différence de conductance au sein des électromètres 104 selon l'orientation du spin des charges dans les qubits de spin, ce qui va se traduire par des signaux de sortie d'amplitude différentes selon l'orientation du spin des charges. Par exemple, le courant traversant un électromètre 104 peut être de l'ordre du pA si un électron présent dans la boîte quantique du qubit de spin a son spin orienté vers le bas, et de l'ordre du nA si l'électron électron présent dans la boîte quantique du qubit de spin a son spin orienté vers le haut.

La FIGURE 8 illustre un deuxième exemple de moyen de mesure 702 qui peut être implémenté dans les dispositifs 100 ou 700. Cet exemple se focalise sur le moyen de mesure associé au premier oscillateur verrouillé par injection $106_1$. Bien entendu, le moyen de mesure 702 illustré en FIGURE 2 peut être couplé à n'importe quel oscillateur verrouillé par injection 106 du dispositif 100 ou 700 selon l'invention. Les moyens de mesure 702 associés à chaque oscillateur verrouillé par injection 106 peuvent être similaires ou différents.

Dans cet exemple, le signal $122_1$ est émis par le premier oscillateur verrouillé par injection $106_1$. Le moyen de mesure 702 comprend un premier comparateur 802 et un deuxième comparateur 804, une porte ou 806, un système de source de courant 808 ainsi qu'un condensateur 810. Le moyen de mesure illustré en FIGURE 8 comprend aussi un deux dispositifs de verrouillage, notés respectivement 812 et 814, et connus sous le nom anglais de système « D latch » (« verrous D » en français). Le moyen de mesure illustré en FIGURE 8 comprend aussi une ligne de retard 816 ainsi qu'un commutateur CMOS 818. Le deuxième comparateur 804 est agencé pour émettre un signal qui comprend alternativement deux états, un état bas 0 et un état haut 1. La source de courant 808 est agencée pour alimenter en continu le condensateur 810.

Quand le premier oscillateur verrouillé par injection $106_1$ est dans son premier état de fonctionnement, c'est-à-dire lorsqu'il y a une conservation du signal d'injection $122_1$, alors le premier comparateur 802 émet un signal oscillant en sa sortie. A chaque front montant ou descendant de ce signal, les bascules 812 (pour les fronts montants) et 814 (pour les fronts descendants) ferment le commutateur 818 pendant un temps déterminé par la ligne de retard 816 (la porte ou 806 permet de combiner les signaux de pilotage issus des verrous). La tension aux bornes du condensateur ne peut donc pas croître, et la sortie du comparateur 804 reste à un niveau bas. Si par contre le premier oscillateur verrouillé par injection $106_1$ est dans son deuxième état de fonctionnement, l'amplitude du signal d'injection $122_1$ a une valeur plus faible, qui ne permet pas au premier comparateur 802 de basculer. La sortie du commutateur 810 reste donc à un niveau bas, et le commutateur 818 reste dans son état ouvert. Dans ces conditions, la tension aux bornes du condensateur 810 augmente linéairement jusqu'à provoquer un basculement de la sortie du comparateur 804 vers son niveau haut.

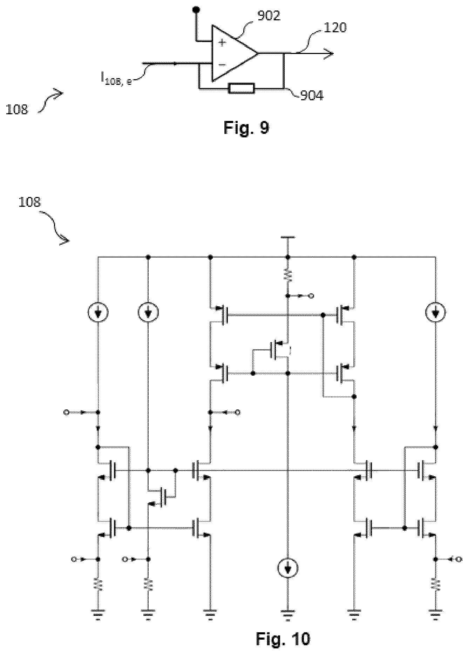

La FIGURE 9 illustre un exemple d'un circuit d'amplification 108 qui peut être implémenté dans les dispositifs 100 ou 700.

Dans l'exemple illustré en FIGURE 9, le circuit d'amplification 108 peut comprendre un amplificateur 902 comprenant une contre réaction résistive 904. Le circuit d'amplification 108 illustré en FIGURE 9 est un amplificateur transimpédance. La contreréaction résistive 904 est agencée pour convertir le signal à l'entrée du circuit d'amplification 108 en un signal d'injection 120 relatif à une tension. Dans le cas illustré en FIGURE 9, le gain du circuit d'amplification 108 est proportionnel à la résistance présente sur la contre réaction résistive 904. A titre d'exemple non limitatif, le gain du circuit d'amplification 108 illustré en FIGURE 9 est de l'ordre du M$\Omega$. Le circuit d'amplification 108 peut comprendre une bande passante entre 10-30 M$\Omega$, un gain de 10 M$\Omega$, un bruit d'entrée de l'ordre de 10 fA/sqrt(Hz) et une consommation de l'ordre de la centaine de microwatts. Dans le dispositif 100 ou 700, la bande passante du circuit d'amplification 108 est choisie de manière à ce que toutes les fréquences de tous les signaux d'excitation 122 soient comprises dans cette bande passante.

Bien entendu, d'autres agencements peuvent être implémentés dans le dispositif selon l'invention, tels que ceux décrits dans L. Le. Guevel 2020.

La FIGURE 10 illustre un autre exemple de circuit d'amplification 108 qui peut être implémenté dans les dispositifs 100 ou 700.

Le circuit d'amplification illustré en FIGURE 100 est agencé pour réaliser une amplification en courant. Ainsi, dans cet exemple, le signal d'injection 122 est relatif à un courant. Dans ce cas, la boucle de retour 114 du dispositif 100 ou 700 est connectée à un port d'entrée en courant de chaque oscillateur verrouillé par injection 106.

Le circuit d'amplification 108 illustré en FIGURE 10 est réalisé suivant les caractéristiques décrites dans le document Bonteanu 2017.

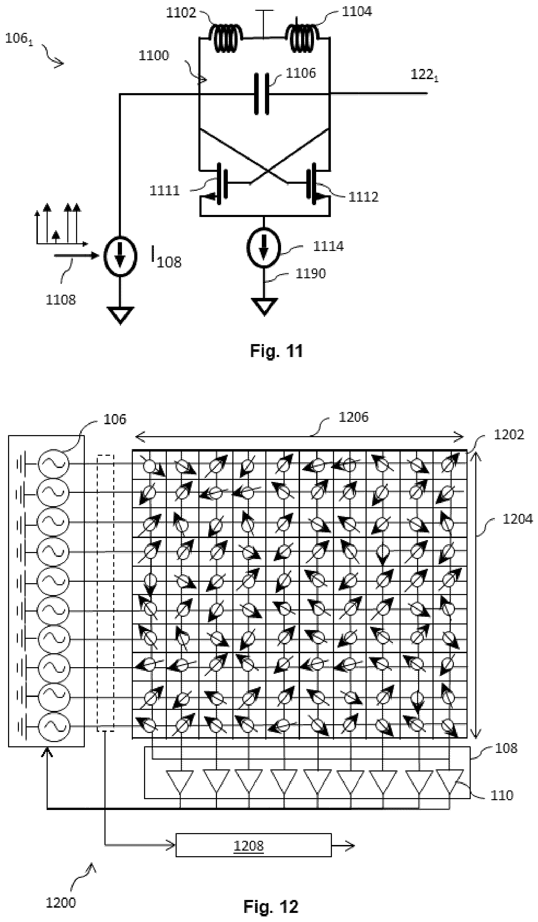

La FIGURE 11 illustre un exemple d'oscillateur verrouillé par injection 106. L'oscillateur verrouillé par injection 106 illustré en FIGURE 6 est, à titre d'exemple, le premier oscillateur verrouillé par injection $106_1$. L'oscillateur verrouillé par injection $106_1$ illustré sur la FIGURE 11 comprend une architecture de type LC, appelée en anglais sous le nom de *« cross-coupled differential topology with an NMOS pair and a tail-current at the source ».* L'oscillateur verrouillé par injection comprend un circuit de résonance 1100 connu sous le nom anglais de « tank LC ». Le circuit de résonance comprend deux inductances 1102 et 1104, un condensateur 1106, deux transistors CMOS 1111 et 1112 et une source de courant 1114 pour générer un courant de polarisation 1190. La grille du transistor 1111 est connectée au drain du transistor 1112 et réciproquement, et les drains des deux transistors sont connectés au circuit de résonance 1100. Dans ce type d'architecture, le signal d'excitation 122 émis par l'oscillateur verrouillé par injection 106 présente ainsi un amortissement lié aux pertes d'énergie dans les inductances 1102 et 110 et le condensateur 1106 Afin de compenser cet amortissement, les transistors NMOS 1111 et 1112 ainsi que la source de courant 1114 viennent agir comme une « résistance négative » qui permet d'injecter de l'énergie dans l'oscillateur verrouillé par injection 106, et le maintenir dans un état oscillant non-amorti. L'énergie injectée par les transistors 1111 et 1112 et la source de courant 1114 compensent les pertes résistives dans le circuit de résonance 1100.

Le signal d'excitation $122_1$ émis par l'oscillateur verrouillé par injection $106_1$ illustré en FIGURE 11 comprend une fréquence qui s'écrit suivant la formule :

$$f_i = \frac{1}{2\,\pi}\sqrt{\frac{1}{L\,C}}$$

avec L correspondant à l'inductance totale du circuit de résonance 1110, C la capacité totale du circuit de résonance 1100. Un tel agencement permet de favoriser la fréquence d'oscillation propre à chaque oscillateur verrouillé par injection 106 ainsi que la simplicité des réglages de cette fréquence.

Ainsi, suivant cet agencement, le signal d'excitation 122 illustré en FIGURE 11 comprend une fréquence d'oscillation $f_i$ naturelle.

La fréquence d'oscillation de l'oscillateur verrouillé par injection $106_1$ peut être ajustée de manière capacitive. Ceci permet de facilité l'adaptabilité et/ou la modification de la fréquence de chaque signal d'excitation 122 que ce soit sur le choix de sa valeur ainsi que sur une potentielle modification de cette valeur. En outre, comme la fréquence d'oscillation du signal d'injection $122_1$ émis par l'oscillateur verrouillé par injection $106_1$ dépend de la capacité totale du circuit de résonance 1100 ainsi que de l'inductance totale du circuit de résonance 1100. Ainsi la fréquence d'oscillation $f_i$ peut facilement être ajustée et/ou modifiée en modifiant l'inductance totale et/ou la capacité totale du circuit de résonance 1100. La fréquence d'oscillation de chaque oscillateur verrouillé par injection 106 peut être ajustée de manière capacitive. Par exemple, le premier oscillateur verrouillé par injection $106_1$ peut comprendre une capacité totale égale à $C_1 = C_{ref}$

(typiquement, comprise entre 10fF - femtoFarads - et 1 pF - picoFarad, en fonction de la fréquence d'oscillation souhaitée), le deuxième oscillateur verrouillé par injection $106_2$ peut comprendre une capacité totale égale à $C_2 = 2^2 C_{ref} = 4C_{ref}$, le troisième oscillateur verrouillé par injection $106_3$ peut comprendre une capacité totale égale à $C_3 = 2^3 C_{ref} = 8C_{ref}$, et le quatrième oscillateur verrouillé par injection $106_4$ peut comprendre une capacité totale égale à $C_4 = 2^4 C_{ref} = 16\ C_{ref}$. La valeur de la capacité totale de chaque oscillateur verrouillé par injection 106 peut être programmable. Par exemple, le dispositif 100 ou 700 peut comprendre une pluralité de commutateurs couplés à une mémoire agencée pour régler la capacité totale de chaque oscillateur verrouillé par injection 106. Ainsi, la capacité de chaque oscillateur verrouillé par injection 106 peut être réglée de manière plus précise.

L'oscillateur verrouillé par injection $106_1$ illustré en FIGURE 11 comprend un port d'entrée 1108 qui peut être un port d'entrée en courant ou un port d'entrée en tension. Dans le cas où le port 1108 est un port d'entrée en tension, une tension de sortie de l'amplificateur 110 pilote la source de courant $I_{108}$ avec un certain gain de transconductance. Si par contre le port 1108 est un port d'entée en courant, un courant de sortie de l'amplificateur 110 est recopié (avec, le cas échéant, un gain) par la source de courant $I_{108}$. Ainsi, le signal d'injection peut être une tension ou un courant, ce qui permet de proposer un oscillateur verrouillé par injection facile à implémenter dans le dispositif selon l'invention. Dans le cas de l'utilisation du port d'entrée en courant, l'oscillateur verrouillé par injection $106_1$ de cet exemple peut être couplé au circuit d'amplification 108 illustré en FIGURE 10. Dans le cas où le signal d'injection 120 est relatif à une tension, par exemple lorsque le circuit d'amplification 108 contient une contre réaction résistive comme illustrée en FIGURE 9, le circuit d'amplification 108 peut être couplé avec un étage d'amplification à transconductance, par exemple, un transistor MOS agencé pour convertir une tension d'entrée sur la grille du transistor MOS en un courant drain-source.

Dans l'exemple illustré, lorsque le signal d'injection 120 (ici relatif à un courant) ne contient pas de raie à la fréquence de l'oscillateur verrouillé par injection $106_1$, le signal d'injection 120 n'a aucun impact sur la dynamique de l'oscillateur verrouillé par injection $106_1$. Par conséquent, le signal d'excitation $122_1$ émis par l'oscillateur verrouillé par injection $106_1$ n'est pas modifié. Cela est dû au fait que le signal d'injection 120 est filtré par le circuit de résonance LC.

La fonction de transfert simplifiée reliant la tension de sortie de l'oscillateur verrouillé par injection $106_1$ au signal d'injection 120 peut s'exprimer suivant la formule suivante :

$$|H| = \left|\frac{V_{106}}{I_{108}}\right| = \left|\frac{j\frac{L}{2}\omega}{1-\left(\frac{w_0}{w}\right)^2}\right| = \frac{L}{2}\omega\left|\frac{\frac{w^2}{w_0}}{1-\left(\frac{w}{w_0}\right)^2}\right|$$

Avec $I_{108}$ correspondant au signal d'injection 120 relatif à un courant et $V_{106}$ correspondant à la tension de sortie de l'oscillateur verrouillé par injection $106_1$. Ainsi, dans l'exemple illustré, la fonction de transfert est minimale pour $w = w_0$. Comme expliqué plus haut en référence à la figure 9, lorsque l'amplitude du signal d'injection 120, à la raie correspondante, est inférieure à un seuil, l'oscillateur verrouillé par injection $106_1$ fonctionne dans son premier état de fonctionnement. Le signal d'excitation $122_1$ de l'oscillateur verrouillé par injection $106_1$ n'est pas modifié.

Lorsque l'amplitude du signal d'injection (120), à la raie correspondante, est supérieure ou égale au seuil, l'oscillateur verrouillé par injection 106, passe dans son deuxième mode de fonctionnement. Le signal d'excitation $122_1$ diminue. En effet, dans l'exemple illustré en FIGURE 11, la fonction de transfert augmente et donc l'impact du signal d'injection 120 sur la dynamique de l'oscillateur verrouillé par injection $106_1$ illustré par l'équation précédente n'est plus négligeable. Le signal d'injection 122, vient s'opposer au fonctionnement de l'oscillateur verrouillé par injection $106_1$. Le signal d'excitation $122_1$ émis par l'oscillateur verrouillé par injection $106_1$ fonctionnant dans son premier état de fonctionnement a une amplitude typiquement au moins 10 fois supérieureà celle du signal d'excitation 122 émis par l'oscillateur verrouillé par injection $106_1$ fonctionnant dans son deuxième état de fonctionnement. A titre d'exemple, l'amplitude du signal d'excitation $122_1$ émis par l'oscillateur verrouillé par injection $106_1$ lorsqu'il fonctionne dans son premier état de fonctionnement peut être de l'ordre de quelques centaines de mV alors que lorsqu'il est dans son deuxième état de fonctionnement, le signal émis par l'oscillateur verrouillé par injection $106_1$ il peut être de l'ordre de quelques dizaines de mV. Le signal d'excitation $122_1$ émis par l'oscillateur verrouillé par injection $106_1$ fonctionnant dans son deuxième état de fonctionnement présente une amplitude qui dépend du signal d'injection 120 et du courant de polarisation de l'oscillateur verrouillé par injection $106_1$ lorsqu'il est dans son premier état de fonctionnement. Cela permet de régler la valeur de diminution des oscillateurs verrouillés par injection fonctionnant dans leur deuxième état de fonctionnement. Par conséquent, la diminution du signal d'injection peut être faible, de ce fait le signal d'excitation peut continuer à exciter l'électromètre correspondant. A l'inverse, la diminution peut être importante, ce qui peut conduire à l'émission d'un signal d'excitation ne permettant pas l'excitation de l'électromètre correspondant, comme cela peut aussi conduire l'arrêt de l'oscillateur verrouillé par injection.

Bien entendu, l'agencement de l'oscillateur verrouillé par injection $106_1$ n'est pas limité à l'exemple ci-dessous. D'autres agencements d'oscillateur verrouillé par injection 106 sont applicables au fonctionnement des oscillateurs verrouillés par injection 106 utilisés dans le dispositif selon l'invention. Par exemple, l'oscillateur verrouillé par injection $106_1$ peut comprendre une structure LC connue sous le nom anglais par « *NMOS pair and tail current at the drain* », ou « *PMOS pair and tail current at the source*, « *PMOS pair and tail current at the drain* », ou des architectures LC plus complexes, comme par exemple une topologie « *CMOS Core Cross-coupled differential topologies* ».

Dans les dispositifs 100 ou 700, les oscillateurs verrouillés par injection 106 peuvent tous être identiques, par exemple ils peuvent tous avoir l'agencement décrit en FIGURE 11, ou ils peuvent comprendre un agencement différent d'un socillateur à un autre.

La FIGURE 12 est un autre exemple d'un dispositif quantique 1200 selon l'invention.

Dans le dispositif illustré en FIGURE 12, les qubits de spins sont agencés dans une matrice de qubits de spins 1202 comprenant n lignes selon une première direction 1204 et m colonnes selon une deuxième direction 1206.

Dans le dispositif 1200, les électromètres 104 sont agencés sous la forme d'une matrice (non illustrée) positionnée au regard de la matrice de qubits de spins 1202 de sorte que l'au moins une boite quantique de chaque qubit de spin soit couplée de manière capacitive à une boite quantique d'un des électromètres 104.

Dans l'exemple illustré en FIGURE 12, la matrice de qubits de spin comprend n lignes et m colonnes avec n et m nombres entiers supérieurs ou égaux à 1 pouvant être égaux ou différents. La matrice d'électromètres 104 est disposée au-dessus ou en dessous de la matrice de qubits de spin 1202 telle que la boîte quantique de chacun des qubits de spin soit couplée de manière capacitive à une boîte quantique d'un des électromètres 104 se trouvant à proximité, au-dessus ou en dessous, de la boîte quantique de chacun des qubits de spin. Dans cet exemple, la matrice d'électromètres comprend n lignes et m colonnes.

Les paramètres n et m peuvent prendre des valeurs typiquement comprises entre 10 et 1000. A titre d'exemple, n et m peuvent valoir 100.

La matrice de qubits de spin 1202 et la matrice d'électromètres peuvent être réalisées de manière superposée via la mise en œuvre d'un procédé d'intégration 3D.

Dans l'exemple illustré en FIGURE 12, le dispositif 1200 comprend dans ce mode de réalisation n moyens d'excitation 106 agencés selon la première direction. Chaque oscillateur verrouillé par injection 106 est couplé à tous les électromètres 104 couplés à des qubits de spin positionnés sur une même ligne de la matrice de qubits de spin 1202. Tous les électromètres 104 disposés sur une même ligne de la matrice de qubits de spin 1202 sont couplés à un même oscillateur verrouillé par injection 106 de manière à ce qu'un même signal d'excitation 122 soit appliqué sur au moins une électrode d'entrée des électromètres 104 présents sur la même ligne de la matrice d'électromètres.

Dans le dispositif 1200, le circuit d'amplification 108 comprend aussi m amplificateur 110 agencés selon la deuxième direction. Chaque amplificateur 110 est couplé à tous les électromètres 104 couplés à des qubits de spin positionnés sur une même colonne de la matrice de qubits de spin 1202, la sortie de chaque amplificateur 110 étant couplée à l'entrée d'un oscillateur verrouillé par injection 106. De cette manière, tous les signaux de sortie délivrés par les électromètres présents sur une même colonne de la matrice d'électromètres s'additionnent avant d'être envoyés dans l'amplificateur 110 correspondant.

Ainsi, chaque colonne de la matrice de qubits de spin 1202 (couplée aux électromètres) associée à un oscillateur verrouillé par injection 106 et un amplificateur 110 du circuit d'amplification correspond au dispositif 100. Le fonctionnement du dispositif 1200 est donc similaire à celui du dispositif 100.

Le dispositif 1200 comprend aussi m commutateurs agencés selon la deuxième direction et positionnés en amont ou, de préférence, en aval du circuit d'amplification 108. Chaque commutateur est agencé pour connecter de manière alternée tous les électromètres 104 couplés à des qubits de spin positionnés sur une même colonne de la matrice de qubits de spin 1202 à l'amplificateur 110 correspondant ou à l'oscillateur verrouillé par injection 106 correspondant.

Le dispositif 1200 peut aussi comprendre des circuits de polarisation couplés à chaque électromètre 104.

En outre, le dispositif 1200 comprend aussi un moyen de mesure 1208 couplé à la sortie de chaque oscillateur verrouillé par injection 106.

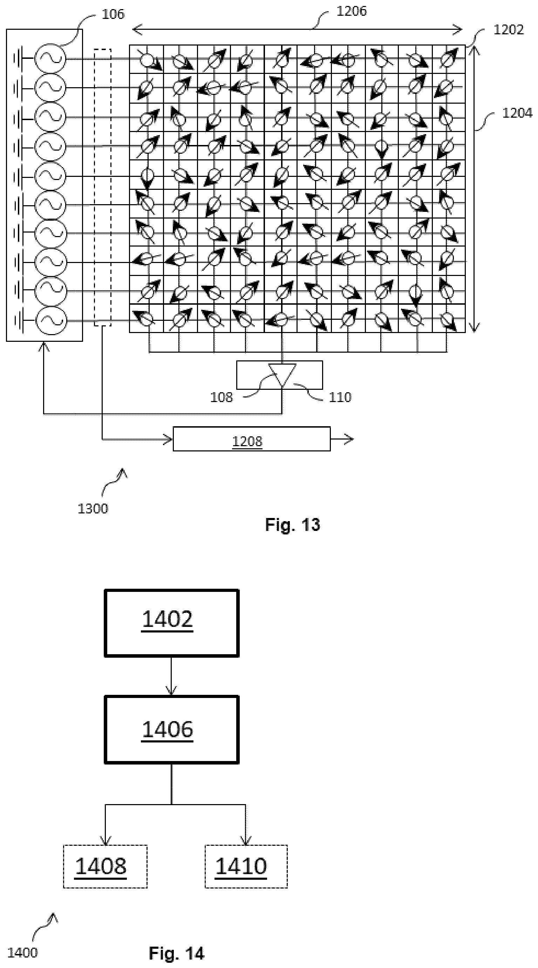

La FIGURE 13 est un autre exemple d'un dispositif quantique 1300 selon l'invention. Le dispositif 1300 comprend tous les éléments du dispositif 1200. Seules les différences avec la FIGURE 12 seront décrites.

Le circuit d'amplification 108 comprend un seul et unique amplificateur 110. Le dispositif 1300 comprend en outre m commutateurs (non illustrés) agencés selon la deuxième direction, chaque commutateur étant agencé pour connecter de manière alternée tous les électromètres 104 couplés à des qubits de spin positionnés sur une même colonne de la matrice de qubits de spin 1202 à l'amplificateur 110.

Suivant les variantes des dispositifs 1200 et 1300, le dispositif peut lire une matrice de qubits de spin pouvant comprendre plusieurs milliers de qubits de spin. La diminution de consommation d'énergie ainsi que la compacité du dispositif sont améliorées par rapport à un dispositif que ne participe pas à la lecture d'une matrice de qubits de spin. Les commutateurs de ces dispositifs sont agencés pour réaliser une lecture séquentielle de la matrice de qubits de spin 1202. Notamment, la lecture est réalisée colonne par colonne de la matrice de qubits de spin 1202.

La variante décrite suivant le dispositif 1300 peut être privilégiée car elle ne nécessite que l'utilisation d'un amplificateur dans le circuit d'amplification pour l'ensemble de la matrice de qubits de spin. Par conséquent, cette version nécessite moins de composants électroniques (ici moins d'amplificateurs), ce qui permet d'améliorer la compacité ainsi que la diminution de la consommation d'énergie.

Suivant des variantes des dispositifs 1200 et 1300, la matrice d'électromètres 104 comprend moins d'électromètres que de qubits de spin présents dans la matrice de qubits de spin 1202. Les dispositifs 1200 et 1300 peuvent dans ce cas comprendre une unité de traitement agencée pour retrouver, par triangulation, l'état de chaque qubit de spin à partir d'un signal émis par chaque électromètre 104. L'unité de traitement peut comprendre un ordinateur et/ou un processeur et/ou un module de calcul.

La FIGURE 14 est une représentation schématique d'un premier exemple de procédé 1400 selon l'invention. Le procédé 1400 est un procédé pour la lecture de plusieurs qubits de spin 102 comprenant chacun une boite quantique. Le procédé 1400 est agencé pour être mis en œuvre par l'un quelconque des dispositifs 100, 700, 1200, et 1300.

Le procédé 1400 illustré en FIGURE 14 utilise les électromètres 104, chacun étant couplé de manière capacitive à un puit de potentiel de l'au moins une boîte quantique d'au moins un des qubits de spin 102, les oscillateurs verrouillés par injection 106 chacun étant couplé à au moins une électrode d'un des électromètres 104, le circuit d'amplification 108, ledit circuit d'amplification 108 étant couplé à la sortie de chaque électromètre 104 et comprenant au moins un amplificateur 110 et une sortie 112, ledit procédé comprenant :

- une émission 1402 par chaque oscillateurs verrouillés par injection 106 du signal signal d'excitation 122 sur au moins une électrode d'entrée de électromètre 104 auquel il est couplé, chaque signal d'excitation 122 ayant une fréquence différente, caractérisé en ce que ledit procédé 1400 comprend en outre :
- une injection 1406 du signal d'injection 120, dans chaque oscillateur verrouillé par injection 106 par la boucle de retour 114 couplant la sortie 112 dudit circuit d'amplification 108 à l'entrée de chaque oscillateur verrouillé par injection 106, le signal d'injection 120 comprenant des composantes aux fréquences desdits signaux d'excitation 122la fréquence, et pour chaque oscillateur verrouillé par injection 106, une diminution 1408 ou une conservation 1410 du signal d'excitation 122 en fonction dudit signal d'injection.

Le procédé selon l'invention propose une solution pour la lecture de plusieurs qubits de spin simple à mettre en œuvre et réalisé de manière à utiliser le moins de composants électroniques possibles. De ce fait, le procédé confère des avantages similaires du dispositif selon l'invention, notamment dans la limitation de la consommation d'énergie utilisée par les composants mettant en œuvre le procédé selon l'invention.

Liste des documents cités

Vandersypen 2016 : « Interfacing spin qubits in quantum dots and donors - hot, dense and coherent", ARXIV.ORG, 18 décembre 2016, DOI: 10.1038/S41534-0038-Y

Bonteanu 2017 : A current controlled CMOS current amplifier», G. Bonteanu, DOI : 10.1109/ISEEE.2017.8170668

L. Le. Guevel 2020 : L. Le. Guevel et al., "19.2 A 110mK 295$\mu$ W 28nm FDSOI CMOS Quantum Integrated Circuit with a 2.8GHz Excitation and nA Current Sensing of an On-Chip Double Quantum Dot," 2020 IEEE International Solid-State Circuits Conference - (ISSCC), San Francisco, CA, USA, 2020, pp. 306-308, doi: 10.1109/ISSCC19947.2020.9063090.

Yoon 2004: Sangwoong Yoon, « LC-tank CMOS Voltage-Controlled Oscillators using High Quality Inductors Embedded in Advanced Packaging Technologies », Geogia Institute of technology 2004

Reilley 2007 : « Fast single-charge sensing a RF quantum point contact » D. J Reilley et al., APPLIED PHYSICS LETTERS 91, 162101, 2007

**Revendications**

**1.** Dispositif quantique (100, 700, 1200, 1300) comprenant :

- plusieurs qubits de spin (102) comprenant chacun au moins une boîte quantique,
- plusieurs électromètres (104), chacun étant couplé de manière capacitive à un puit de potentiel de l'au moins une boîte quantique (102) d'au moins un des qubits de spin, et

- plusieurs oscillateurs verrouillés par injection (106), chacun étant couplé à au moins une électrode d'un des électromètres (104) et agencé pour émettre un signal oscillant (122), appelé signal d'excitation (122), sur au moins une électrode d'entrée de l'électromètre (104) auquel il est couplé, chaque signal d'excitation (122) ayant une fréquence différente,

**caractérisé en ce qu'**il comprend également

- un circuit d'amplification (108) comprenant au moins un amplificateur (110), ledit circuit d'amplification (108) étant couplé à la sortie de chaque électromètre (104) et comprenant une sortie (112),

et **en ce que** ledit dispositif (100, 700, 1200, 1300) comprend une boucle de retour (114) couplant la sortie (112) dudit circuit d'amplification (108) à une entrée de chaque oscillateur verrouillé par injection (106) et dans laquelle circule un signal électrique (120), appelé signal d'injection (120), comprenant des composantes aux fréquences desdits signaux d'excitation (122), chaque oscillateur verrouillé par injection (106) étant agencé pour recevoir le signal d'injection (120) et en fonction dudit signal d'injection (120), conserver son signal d'excitation (122) dans un premier état de fonctionnement ou diminuer son signal d'excitation (122) dans un deuxième état de fonctionnement.

2. Dispositif (100, 700, 1200, 1300) selon la revendication précédente, dans lequel le signal d'injection (120) présente un spectre comprenant une raie associée à chaque signal d'excitation (122), chaque raie dudit spectre présentant une amplitude fonction d'un état du qubit de spin.

3. Dispositif (100, 700, 1200, 1300) selon la revendication précédente, dans lequel chaque oscillateur verrouillé par injection (106) est agencé pour :

   - fonctionner dans son premier état de fonctionnement, lorsque l'amplitude du signal d'injection (120), à la raie correspondante, est inférieure à un seuil, et
   - fonctionner dans son deuxième état de fonctionnement, lorsque l'amplitude du signal d'injection (120), à la raie correspondante, est supérieure ou égale audit seuil.

4. Dispositif (100, 700, 1200, 1300) selon l'une quelconque des revendications précédentes, dans lequel, pour chaque oscillateur verrouillé par injection (106), le signal d'excitation (122) émis dans le premier état de fonctionnement est au moins 10 fois supérieurau signal d'excitation (122) émis dans le deuxième état de fonctionnement.

5. Dispositif (700, 1200, 1300) selon l'une quelconque des revendications précédentes, comprenant plusieurs moyens de mesure (702, 1208) chacun étant couplé à un oscillateur verrouillé par injection (106), chaque moyen de mesure (702, 1208) étant agencé pour détecter l'état de fonctionnement dudit oscillateur verrouillé par injection (106) et en fonction de l'état détecté, émettre un signal, dit de mesure, relatif à un état du spin.

6. Dispositif (100, 700, 1200, 1300) selon l'une quelconque des revendications précédentes, dans lequel le circuit d'amplification (108) est agencé pour réaliser une amplification négative d'un signal en sortie des électromètres.

7. Dispositif (100, 700, 1200, 1300) selon l'une quelconque des revendications précédentes, dans lequel le circuit d'amplification (108) est agencé pour réaliser une amplification en courant ou alors que l'au moins un amplificateur (110) du circuit d'amplification (108) comprend au moins un amplificateur transimpédance agencé pour convertir un signal d'entrée en une tension à la sortie (112) dudit circuit d'amplification (108).

8. Dispositif (100, 700, 1200, 1300) selon l'une quelconque des revendications précédentes, dans lequel chaque électromètre (104) comprend un drain, et une grille, les oscillateurs verrouillés par injection (106) étant couplés sur le drain ou sur la grille.

9. Dispositif (100, 700, 1200, 1300) selon l'une quelconque des revendications précédentes, dans lequel chaque électromètre (104) comprend un contact ponctuel quantique ou un transistor à un électron.

10. Dispositif (100, 700, 1200, 1300) selon l'une quelconque des revendications précédentes, comprenant plusieurs circuits de polarisations, chacun étant couplé à un électromètre (104) et agencé pour appliquer une tension de polarisation continue sur ledit électromètre (104) adaptée pour que chaque électromètre fonctionne en blocage de Coulomb.

11. Dispositif (1200, 1300) selon l'une quelconque des revendications précédentes, dans lequel:

- les qubits de spins sont agencés dans une matrice de qubits de spins (1202) comprenant n lignes selon une première direction et m colonnes selon une deuxième direction, et
- les électromètres (104) sont agencés sous la forme d'une matrice positionnée au regard de la matrice de qubits de spin (1202) de sorte que l'au moins une boite quantique d'un des électromètres soit couplée de manière capacitive à au moins une boîte quantique d'au moins un qubit de spin.

12. Dispositif (1200) selon la revendication 11, dans lequel le circuit d'amplification (108) comprend :

- m amplificateurs (110) agencés selon la deuxième direction, chaque amplificateur (110) étant couplé à tous les électromètres (104) couplés à des qubits de spin positionnés sur une même colonne de la matrice de qubits de spin (1202), la sortie de chaque amplificateur (110) étant couplée à l'entrée d'un oscillateur verrouillé par injection (106), ledit dispositif (1200) comprenant en outre :

- n moyens d'excitation (106) agencés selon la première direction, chaque oscillateur verrouillé par injection (106) étant couplé à tous les électromètres (104) couplés à des qubits de spin positionnés sur une même ligne de la matrice de qubits de spin (1202),
- m commutateurs agencés selon la deuxième direction et positionnés en amont ou en aval du circuit d'amplification (108), chaque commutateur étant agencé pour connecter de manière alternée tous les électromètres (104) couplés à des qubits de spin positionnés sur une même colonne de la matrice de qubits de spin (1202) à l'amplificateur (110) correspondant ou à l'oscillateur verrouillé par injection (106) correspondant.

13. Dispositif (1300) selon la revendication 11, comprenant :

- n moyens d'excitation (106) agencés suivant la première direction, chaque oscillateur verrouillé par injection (106) étant couplé à tous les électromètres (104) couplés à des qubits de spin positionnés sur une même ligne de la matrice de qubits de spin (1202), le circuit d'amplification (108) comprenant un seul amplificateur (110), ledit dispositif comprenant (1300) en outre
- m commutateurs agencés selon la deuxième direction, chaque commutateur étant agencé pour connecter de manière alternée tous les électromètres (104) couplés à des qubits de spin positionnés sur une même colonne de la matrice de qubits de spin (1202) à l'amplificateur (110), la sortie de l'amplificateur (110) étant couplée à chaque oscillateur verrouillé par injection (106).

14. Dispositif (1200, 1300) selon l'une quelconque des revendications 12 ou 13, dans lequel chaque qubit de spin comprend alternativement deux états, un état haut et un état bas, lorsqu'une boite quantique d'un des électromètres est couplé à au moins une boite quantique d'au moins deux qubits de spin, ledit dispositif comprend en outre une unité de traitement configurée pour retrouver, par triangulation, l'état de chaque qubit de spin à partir d'un signal émis par chaque électromètre, ledit signal étant fonction de l'état du qubit de spin.

15. Procédé (1400) pour la lecture de plusieurs qubits de spin (102) comprenant chacun une boite quantique, ledit procédé (1400) utilisant plusieurs électromètres (104), chacun étant couplé de manière capacitive à un puit de potentiel de l'au moins une boîte quantique d'au moins un des qubits de spin (102), plusieurs oscillateurs verrouillés par injection (106) chacun étant couplé à au moins une électrode d'un des électromètres (104), un circuit d'amplification (108), ledit circuit d'amplification (108) étant couplé à la sortie de chaque électromètre (104) et comprenant au moins un amplificateur (110) et une sortie (112), ledit procédé comprenant :

- une émission (1402) par chaque oscillateurs verrouillés par injection (106) d'un signal oscillant, appelé signal d'excitation (122), sur au moins une électrode d'entrée de électromètre (104) auquel il est couplé, chaque signal d'excitation (122) ayant une fréquence différente, **caractérisé en ce que** ledit procédé (1400) comprend en outre :

- une injection (1406) d'un signal (120), appelé signal d'injection (120), dans chaque oscillateur verrouillé par injection (106) par une boucle de retour (114) couplant la sortie (112) dudit circuit d'amplification (108) à l'entrée de chaque oscillateur verrouillé par injection (106), le signal d'injection (120) comprenant des composantes aux fréquences desdits signaux d'excitation (122), et pour chaque oscillateur verrouillé par injection (106), une diminution (1408) ou une conservation (1410) du signal d'excitation (122) résultant dudit signal d'injection.

**Patentansprüche**

1. Quantenvorrichtung (100, 700, 1200, 1300), umfassend:

   - mehrere Spin-Qubits (102), die jeweils mindestens einen Quantenpunkt umfasst,
   - mehrere Elektrometer (104), die jeweils kapazitiv mit einem Potentialtopf des mindestens einen Quantenpunkts (102) mindestens eines der Spin-Qubits gekoppelt sind, und
   - mehrere durch Injektion verriegelte Oszillatoren (106), die jeweils mit mindestens einer Elektrode eines der Elektrometer (104) gekoppelt sind und angeordnet sind, um ein oszillierendes Signal (122), Anregungssignal (122) genannt, auf mindestens einer Eingangselektrode des Elektrometers (104), mit dem er gekoppelt ist, auszugeben, wobei jedes Anregungssignal (122) eine unterschiedliche Frequenz aufweist,
   **dadurch gekennzeichnet, dass** sie auch umfasst
   - eine Verstärkungsschaltung (108), umfassend mindestens einen Verstärker (110), wobei die Verstärkungsschaltung (108) mit dem Ausgang eines jeden Elektrometers (104) gekoppelt ist und einen Ausgang (112) umfasst,

   und dadurch, dass die Vorrichtung (100, 700, 1200, 1300) einen Rückführkreis (114) umfasst, der den Ausgang (112) der Verstärkungsschaltung (108) mit einem Eingang eines jeden durch Injektion verriegelten Oszillators (106) koppelt, und in dem ein elektrisches Signal (120), Injektionssignal (120) genannt, zirkuliert, umfassend Komponenten mit den Frequenzen der Anregungssignale (122), wobei jeder durch Injektion verriegelte Oszillator (106) angeordnet ist, um das Injektionssignal (120) zu empfangen, und in Abhängigkeit von dem Injektionssignal (120) sein Anregungssignal (122) in einem ersten Betriebszustand beizubehalten oder sein Anregungssignal (122) in einem zweiten Betriebszustand zu reduzieren.

2. Vorrichtung (100, 700, 1200, 1300) nach dem vorstehenden Anspruch, wobei das Injektionssignal (120) ein Spektrum aufweist, das eine Linie umfasst, der jedem Anregungssignal (122) zugeordnet ist, wobei jede Linie des Spektrums eine Amplitude in Abhängigkeit von einem Zustand des Spin-Qubits aufweist.

3. Vorrichtung (100, 700, 1200, 1300) nach dem vorstehenden Anspruch, wobei jeder durch Injektion verriegelte Oszillator (106) angeordnet ist, um:

   - in seinem ersten Betriebszustand betrieben zu werden, wenn die Amplitude des Injektionssignals (120), bei entsprechender Linie, kleiner als eine Schwelle ist, und
   - in seinem zweiten Betriebszustand betrieben zu werden, wenn die Amplitude des Injektionssignals (120), bei entsprechender Linie, größer als oder gleich der Schwelle ist.

4. Vorrichtung (100, 700, 1200, 1300) nach einem der vorstehenden Ansprüche, wobei das Anregungssignal (122), das im ersten Betriebszustand ausgegeben wird, für jeden durch Injektion verriegelten Oszillator (106) mindestens 10-mal größer als das Anregungssignal (122) ist, das im zweiten Betriebszustand ausgegeben wird.

5. Vorrichtung (700, 1200, 1300) nach einem der vorstehenden Ansprüche, umfassend mehrere Messmittel (702, 1208), die jeweils mit einem durch Injektion verriegelten Oszillator (106) gekoppelt sind, wobei jedes Messmittel (702, 1208) angeordnet ist, um den Betriebszustand des durch Injektion verriegelten Oszillators (106) zu erkennen, und in Abhängigkeit vom erkannten Zustand ein Messsignal genanntes Signal in Bezug zu einem Zustand des Spins auszugeben.

6. Vorrichtung (100, 700, 1200, 1300) nach einem der vorstehenden Ansprüche, wobei die Verstärkungsschaltung (108) angeordnet ist, um eine negative Verstärkung eines Signals am Ausgang der Elektrometer zu realisieren.

7. Vorrichtung (100, 700, 1200, 1300) nach einem der vorstehenden Ansprüche, wobei die Verstärkungsschaltung (108) angeordnet ist, um eine Stromverstärkung zu realisieren oder der mindestens eine Verstärker (110) der Verstärkungsschaltung (108) mindestens einen Transimpedanz-Verstärker umfasst, der angeordnet ist, um ein Eingangssignal in eine Spannung am Ausgang (112) der Verstärkungsschaltung (108) umzuwandeln.

8. Vorrichtung (100, 700, 1200, 1300) nach einem der vorstehenden Ansprüche, wobei jeder Elektrometer (104) einen Drain, und ein Gate umfasst, wobei die durch Injektion verriegelten Oszillatoren (106) mit dem Drain oder mit dem Gate gekoppelt sind.

9. Vorrichtung (100, 700, 1200, 1300) nach einem der vorstehenden Ansprüche, wobei jeder Elektrometer (104) einen Quantenpunktkontakt oder einen Transistor mit einem Elektron umfasst.

10. Vorrichtung (100, 700, 1200, 1300) nach einem der vorstehenden Ansprüche, umfassend mehrere Polarisierungsschaltungen, wobei jede mit einem Elektrometer (104) gekoppelt ist und angeordnet ist, um eine Polarisierungsgleichspannung an den Elektrometer (104) anzulegen, die angepasst ist, damit jeder Elektrometer in einer Coulomb-Blockade betrieben wird.

11. Vorrichtung (1200, 1300) nach einem der vorstehenden Ansprüche, wobei:

    - die Spin-Qubits in einer Matrix von Spin-Qubits (1202) angeordnet sind, die n Zeilen in einer ersten Richtung und m Spalten in einer zweiten Richtung umfasst, und
    - die Elektrometer (104) in Form einer Matrix angeordnet sind, die gegenüber der Matrix von Spin-Qubits (1202) angeordnet ist, sodass der mindestens eine Quantenpunkt eines der Elektrometer kapazitiv mit mindestens einem Quantenpunkt mindestens eines Spin-Qubits gekoppelt ist.

12. Vorrichtung (1200) nach Anspruch 11, wobei die Verstärkungsschaltung (108) umfasst:

    - m Verstärker (110), die in der zweiten Richtung angeordnet sind, wobei jeder Verstärker (110) mit allen Elektrometern (104) gekoppelt ist, die mit den Spin-Qubits gekoppelt sind, die in einer gleichen Spalte der Matrix von Spin-Qubits (1202) positioniert sind, wobei der Ausgang eines jeden Verstärkers (110) mit dem Eingang eines durch Injektion verriegelten Oszillators (106) gekoppelt ist, wobei die Vorrichtung (1200) weiter umfasst:

        - n Anregungsmittel (106), die in der ersten Richtung angeordnet sind, wobei jeder durch Injektion verriegelte Oszillator (106) mit allen Elektrometern (104) gekoppelt ist, die mit Spin-Qubits gekoppelt sind, die in einer gleichen Zeile der Matrix von Spin-Qubits (1202) positioniert sind,
        - m Schalter, die in der zweiten Richtung angeordnet sind, und stromaufwärts oder stromabwärts der Verstärkungsschaltung (108) positioniert sind, wobei jeder Schalter angeordnet ist, um abwechselnd alle Elektrometer (104), die mit Spin-Qubits gekoppelt sind, die in einer gleichen Spalte der Matrix von Spin-Qubits (1202) positioniert sind, mit dem entsprechenden Verstärker (110) oder dem entsprechenden durch Injektion verriegelten Oszillator (106) zu verbinden.

13. Vorrichtung (1300) nach Anspruch 11, umfassend:

    - n Anregungsmittel (106), die entlang der ersten Richtung angeordnet sind, wobei jeder durch Injektion verriegelte Oszillator (106) mit allen Elektrometern (104) gekoppelt ist, die mit Spin-Qubits gekoppelt sind, die in einer gleichen Zeile der Matrix von Spin-Qubits (1202) positioniert sind, wobei die Verstärkungsschaltung (108) einen einzigen Verstärker (110) umfasst, wobei die Vorrichtung (1300) weiter umfasst
    - m Schalter, die in der zweiten Richtung angeordnet sind, wobei jeder Schalter angeordnet ist, um abwechselnd alle Elektrometer (104), die mit Spin-Qubits gekoppelt sind, die in einer gleichen Spalte der Matrix von Spin-Qubits (1202) positioniert sind, mit dem Verstärker (110) zu verbinden, wobei der Ausgang des Verstärkers (110) mit jedem durch Injektion verriegelten Oszillator (106) gekoppelt ist.

14. Vorrichtung (1200, 1300) nach einem der Ansprüche 12 oder 13, wobei jedes Spin-Qubit abwechselnd zwei Zustände, einen hohen Zustand und einen niedrigen Zustand, umfasst, wenn ein Quantenpunkt eines der Elektrometer mit mindestens einem Quantenpunkt mindestens zweier Spin-Qubits gekoppelt ist, wobei die Vorrichtung weiter eine Behandlungseinheit umfasst, die konfiguriert ist, um durch Triangulation den Zustand eines jeden Spin-Qubits aus einem Signal zu finden, das durch jeden Elektrometer ausgegeben wird, wobei das Signal vom Zustand des Spin-Qubits abhängig ist.

15. Verfahren (1400) zum Lesen mehrerer Spin-Qubits (102), jeweils einen Quantenpunkt umfassend, wobei das Verfahren (1400) mehrere Elektrometer (104) verwendet, die jeweils kapazitiv mit einem Potentialtopf des mindestens einen Quantenpunkts mindestens eines der Spin-Qubits (102) gekoppelt ist, mehrere durch Injektion verriegelte Oszillatoren (106), die jeweils mit mindestens einer Elektrode eines der Elektrometer (104) gekoppelt sind, eine Verstärkungsschaltung (108), wobei die Verstärkungsschaltung (108) mit dem Ausgang eines jeden Elektrometers (104) gekoppelt ist, und mindestens einen Verstärker (110) und einen Ausgang (112) umfasst, wobei das Verfahren umfasst:

- eine Ausgabe (1402) durch jeden der durch Injektion verriegelte Oszillatoren (106) eines oszillierenden Signals, Anregungssignal (122) genannt, auf mindestens einer Eingangselektrode eines Elektrometers (104), mit dem er gekoppelt ist, wobei jedes Anregungssignal (122) eine unterschiedliche Frequenz aufweist, **dadurch gekennzeichnet, dass** das Verfahren (1400) weiter umfasst:

- eine Injektion (1406) eines Signals (120), Injektionssignal (120) genannt, in jeden durch Injektion verriegelten Oszillator (106) durch einen Rückführkreis (114), der den Ausgang (112) der Verstärkungsschaltung (108) mit dem Eingang eines jeden durch Injektion verriegelten Oszillators (106) koppelt, wobei das Injektionssignal (120) Komponenten mit den Frequenzen der Anregungssignale (122) umfasst, und für jeden durch Injektion verriegelten Oszillator (106), eine Reduzierung (1408) oder eine Beibehaltung (1410) des Anregungssignals (122) das sich aus dem Injektionssignal ergibt.

**Claims**

1. Quantum device (100, 700, 1200, 1300) comprising:

   - multiple spin qubits (102), each comprising at least one quantum dot,
   - multiple electrometers (104), each being capacitively coupled to a potential well of the at least one quantum dot (102) of at least one of the spin qubits, and
   - multiple injection-locked oscillators (106), each being coupled to at least one electrode of one of the electrometers (104) and designed to transmit an oscillating signal (122), called an excitation signal (122), to at least one input electrode of the electrometer (104) to which it is coupled, each excitation signal (122) having a different frequency,
   **characterized in that** it also comprises
   - an amplification circuit (108) comprising at least one amplifier (110), said amplification circuit (108) being coupled to the output of each electrometer (104) and comprising an output (112),

   and **in that** said device (100, 700, 1200, 1300) comprises a feedback loop (114) coupling the output (112) of said amplification circuit (108) to an input of each injection-locked oscillator (106) and through which an electrical signal (120), called an injection signal (120), flows, comprising components at the frequencies of said excitation signals (122), each injection-locked oscillator (106) being designed to receive the injection signal (120) and, as a function of said injection signal (120), keep its excitation signal (122) in a first operating state or decrease its excitation signal (122) in a second operating state.

2. Device (100, 700, 1200, 1300) according to the preceding claim, wherein the injection signal (120) has a spectrum comprising a line associated with each excitation signal (122), each line of said spectrum having an amplitude that is dependent on a state of the spin qubit.

3. Device (100, 700, 1200, 1300) according to the preceding claim, wherein each injection-locked oscillator (106) is designed to:

   - operate in its first operating state when the amplitude of the injection signal (120), at the corresponding spectral line, is below a threshold, and
   - operate in its second operating state when the amplitude of the injection signal (120), at the corresponding spectral line, is greater than or equal to said threshold.

4. Device (100, 700, 1200, 1300) according to any one of the preceding claims, wherein, for each injection-locked oscillator (106), the excitation signal (122) transmitted in the first operating state is at least ten times greater than the excitation signal (122) transmitted in the second operating state.

5. Device (700, 1200, 1300) according to any one of the preceding claims, comprising multiple measurement means (702, 1208), each being coupled to an injection-locked oscillator (106), each measurement means (702, 1208) being designed to detect the operating state of said injection-locked oscillator (106) and, depending on the detected state, to transmit a signal, called a measurement signal, relating to a spin state.

6. Device (100, 700, 1200, 1300) according to any one of the preceding claims, wherein the amplification circuit (108) is designed to negatively amplify a signal output by the electrometers.

7.  Device (100, 700, 1200, 1300) according to any one of the preceding claims, wherein the amplification circuit (108) is designed to perform current amplification or, when the at least one amplifier (110) of the amplification circuit (108) comprises at least one transimpedance amplifier, designed to convert an input signal into a voltage at the output (112) of said amplification circuit (108).

8.  Device (100, 700, 1200, 1300) according to any one of the preceding claims, wherein each electrometer (104) comprises a drain, and a gate, the injection-locked oscillators (106) being coupled to the drain or to the gate.

9.  Device (100, 700, 1200, 1300) according to any one of the preceding claims, wherein each electrometer (104) comprises a quantum point contact or a single-electron transistor.

10. Device (100, 700, 1200, 1300) according to any one of the preceding claims, comprising multiple bias circuits, each being coupled to an electrometer (104) and arranged to apply a DC bias voltage to said electrometer (104) which is designed so that each electrometer produces a Coulomb blockade.

11. Device (1200, 1300) according to any one of the preceding claims, wherein:

    - the spin qubits are arranged in a spin qubit array (1202) comprising n rows in a first direction and m columns in a second direction, and
    - the electrometers (104) are arranged in the form of an array positioned facing the spin qubit array (1202) so that the at least one quantum dot of one of the electrometers is capacitively coupled to at least one quantum dot of at least one spin qubit.

12. Device (1200) according to Claim 11, wherein the amplification circuit (108) comprises:

    - m amplifiers (110) arranged in the second direction, each amplifier (110) being coupled to all of the electrometers (104) coupled to spin qubits positioned on one and the same column of the spin qubit array (1202), the output of each amplifier (110) being coupled to the input of the injection-locked oscillator (106), said device (1200) further comprising:

        - n excitation means (106) arranged in the first direction, each injection-locked oscillator (106) being coupled to all of the electrometers (104) coupled to spin qubits positioned on one and the same row of the spin qubit array (1202),
        - m switches arranged in the second direction and positioned upstream or downstream of the amplification circuit (108), each switch being arranged so as to alternately connect all of the electrometers (104) coupled to spin qubits positioned on one and the same column of the spin qubit array (1202) to the corresponding amplifier (110) or to the corresponding injection-locked oscillator (106):

13. Device (1300) according to Claim 11, comprising:

    - n excitation means (106) arranged in the first direction, each injection-locked oscillator (106) being coupled to all of the electrometers (104) coupled to spin qubits positioned on one and the same row of the spin qubit array (1202), the amplification circuit (108) comprising a single amplifier (110), said device (1300) further comprising:

        - m switches arranged in the second direction, each switch being arranged so as to alternately connect all of the electrometers (104) coupled to spin qubits positioned on one and the same column of the spin qubit array (1202) to the amplifier (110), the output of the amplifier (110) being coupled to each injection-locked oscillator (106).

14. Device (1200, 1300) according to either one of Claims 12 and 13, wherein each spin qubit alternately comprises two states, a high state and a low state, when a quantum dot of one of the electrometers is coupled to at least one quantum dot of at least two spin qubits, said device further comprising a processing unit configured to retrieve, by triangulation, the state of each spin qubit from a signal transmitted by each electrometer, said signal being dependent on the state of the spin qubit

15. Method (1400) for reading multiple spin qubits (102), each comprising a quantum dot, said method (1400) using multiple electrometers (104), each being capacitively coupled to a potential well of the at least one quantum dot of at least one of the spin qubits (102), multiple injection-locked oscillators (106), each being coupled to at least one electrode of one of the electrometers (104), an amplification circuit (108), said amplification circuit (108) being coupled to the output of each electrometer (104) and comprising at least one amplifier (110) and an output (112), said method comprising:

- each of the injection-locked oscillators (106) transmitting (1402) an oscillating signal, called an excitation signal (122), to at least one input electrode of the electrometer (104) to which it is coupled, each excitation signal (122) having a different frequency, **characterized in that** said method (1400) further comprises:

  - injecting (1406) a signal (120), called an injection signal (120), into each injection-locked oscillator (106) via a feedback loop (114) coupling the output (112) of said amplification circuit (108) to the input of each injection-locked oscillator (106), the injection signal (120) comprising components at the frequencies of said excitation signals (122) and, for each injection-locked oscillator (106), decreasing (1408) or maintaining (1410) the excitation signal (122) resulting from said injection signal.

Fig. 1

**Fig. 2**

Fig. 3

Fig. 4

EP 4 152 217 B1

Fig. 5

Fig. 6

Fig. 7

Fig. 8

**Fig. 9**

**Fig. 10**

**Fig. 11**

**Fig. 12**

**Fig. 13**

**Fig. 14**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 3089724

### Littérature non-brevet citée dans la description

- **VANDERSYPEN**. Interfacting spin qubits in quantum dots and donors - hot, dense and coherent. *ARXIV.ORG*, 18 December 2016
- **G. BONTEANU**. *A current controlled CMOS current amplifier*, 2017
- **L. LE. GUEVEL et al.** 19.2 A 110mK $295\mu$ W 28nm FDSOI CMOS Quantum Integrated Circuit with a 2.8GHz Excitation and nA Current Sensing of an On-Chip Double Quantum Dot. *2020 IEEE International Solid- State Circuits Conference - (ISSCC), San Francisco, CA, USA*, 2020, 306-308
- **SANGWOONG YOON**. LC-tank CMOS Voltage-Controlled Oscillators using High Quality Inductors Embedded in Advanced Packaging Technologies. Geogia Institute of technology, 2004
- **D. J REILLEY et al.** Fast single-charge sensing a RF quantum point contact. *APPLIED PHYSICS LETTERS*, 2007, vol. 91, 162101